# EUROPEAN PATENT APPLICATION

(11) **EP 4 578 789 A1**
(43) Date of publication of application: **02.07.2025**
(21) Application number: 23857205.1
(22) Date of filing: 09.08.2023
(51) Int. Cl.: B64D 45/00, B63B 79/30, B63B 79/40, B63H 21/17, B64D 27/24, G05D 1/20, H01M 10/48

(54) **MALFUNCTION INDICATOR DIAGNOSING DEVICE, FLIGHT MANAGEMENT SYSTEM, AND PROGRAM**

(30) Priority: 24.08.2022 JP 2022133586
(71) Applicant: DENSO CORPORATION, Kariya-city, Aichi 448-8661 (JP)
(72) Inventor: NAKAMURA, Masaya, Kariya- city Aichi 4488661 (JP); YOSHIDA, Shuhei, Kariya- city Aichi 4488661 (JP)
(74) Representative: TBK
(86) International application number: PCT/JP2023/029055
(87) International publication number: WO 2024/043092

(57) **Abstract**

An abnormality sign diagnosis device (20) diagnoses an abnormality sign of a battery (106) provided to an eVTOL (100). The abnormality sign diagnosis device (20) includes an abnormality sign determination unit (23) and an output unit (24). The abnormality sign determination unit (23) determines the presence or absence of the abnormality sign of the battery (106) based on battery variation information which is variation information of the battery (106) and environmental variation information which is variation information of an environmental parameter. The output unit (24) outputs information related to the abnormality sign.

## Description

### CROSS REFERENCE TO RELATED APPLICATION

The present application is based on Japanese Patent Application No. 2022-133586 filed on August 24, 2022. The entire disclosures of all of the above applications are incorporated herein by reference.

### TECHNICAL FIELD

The present disclosure relates to an abnormality sign diagnosis device, a navigation management system, and a program.

### BACKGROUND ART

Patent Literature 1 discloses an assembled battery management system to be used in a vehicle such as a hybrid vehicle or an electric automobile. The assembled battery management system determines, based on a variation in characteristics of multiple battery blocks, whether maintenance is required, and issues a notification when the maintenance is required. Contents of the description of the prior art literature are incorporated by reference as a description of technical elements in this description.

### PRIOR ART LITERATURE

### PATENT LITERATURE

PATENT LITERATURE 1: JP5839093B

### SUMMARY OF INVENTION

Since an electric moving object such as an electronic vertical take-off and landing aircraft or an electric submarine moves not only in a horizontal direction but also in a vertical direction, it is desired to avoid a power stop during navigation due to a battery abnormality. For this purpose, it is important to detect a sign of the battery abnormality at an early stage.

However, a change in environment accompanying a movement having a vertical direction component affects behavior of the battery. Therefore, even if the technique of Patent Literature 1 is applied to the electric moving object which moves in the horizontal direction and the vertical direction, accuracy of the abnormality sign is low. In the above viewpoint and other viewpoints that are not mentioned, further improvements are required for an abnormality sign diagnosis device, a navigation management system, and a program.

An object of the present disclosure is to provide an abnormality sign diagnosis device, a navigation management system, and a program capable of improving accuracy of an abnormality sign for an electric moving object which moves in a horizontal direction and a vertical direction.

An aspect of the present disclosure is an abnormality sign diagnosis device for an electric moving object, which is configured to move in a horizontal direction and a vertical direction. The abnormality sign diagnosis device comprises: a determination unit configured to determine presence or absence of an abnormality sign of a battery, which is provided to the electric moving object, based on battery variation information, which is variation information of the battery, and environmental variation information, which is variation information of an environmental parameter; and an output unit configured to output information related to the abnormality sign.

As described above, the change in environment accompanying the movement having the vertical direction component affects the behavior of the battery. According to a disclosed abnormality sign diagnosis device, not only battery variation information but also environmental variation information is used to determine the presence or absence of the abnormality sign of the battery. That is, the presence or absence of the abnormality sign is determined in consideration of an influence of the environmental variation on the battery variation. As a result, accuracy of the abnormality sign can be improved for the electric moving object which moves in the horizontal direction and the vertical direction.

An aspect of the present disclosure is a navigation management system that is for an electric moving object, which includes a plurality of batteries and is configured to move in a horizontal direction and a vertical direction. The navigation management system comprises: an abnormality sign diagnosis device configured to determine presence or absence of an abnormality sign of each of the batteries based on battery variation information, which is variation information of the battery, and environmental variation information, which is variation information of an environmental parameter, and output information related to the abnormality sign; and a navigation management device configured to manage navigation of the electric moving object and perform predetermined control for ensuring safety of the navigation based on the information related to the abnormality sign.

According to the navigation management system of the disclosure, not only the battery variation information but also the environmental variation information is used to determine the presence or absence of the abnormality sign of the battery. That is, the presence or absence of the abnormality sign is determined in consideration of the influence of the environmental variation on the battery variation. As a result, the accuracy of the abnormality sign can be improved for the electric moving object which moves in the horizontal direction and the vertical direction. Accordingly, safety of the navigation can be enhanced.

An aspect of the present disclosure is a program that is to be applied to an electric moving object, which is configured to move in a horizontal direction and a vertical direction. The program is configured to cause at least one processing unit to: determine presence or absence of an abnormality sign of a battery, which is provided to the electric moving object, based on battery variation information, which is variation information of the battery, and environmental variation information, which is variation information of an environmental parameter; and output information related to the abnormality sign.

According to the program of the disclosure, not only the battery variation information but also the environmental variation information is used to determine the presence or absence of the abnormality sign of the battery. That is, the presence or absence of the abnormality sign is determined in consideration of the influence of the environmental variation on the battery variation. As a result, the accuracy of the abnormality sign can be improved for the electric moving object which moves in the horizontal direction and the vertical direction.

Multiple aspects disclosed in the description adopt different technical means to achieve respective objects. Reference numerals in parentheses in the claims and items exemplify the correspondence with portions of embodiments described later, and are not intended to limit the technical scope. The objects, features, and advantageous effects disclosed in this description will become more apparent with reference to the following detailed description and accompanying drawings.

### BRIEF DESCRIPTION OF THE DRAWINGS

FIG. 1 is a diagram showing a configuration of an eVTOL and a ground station.
FIG. 2 is a diagram showing a schematic configuration of a navigation management system in a first embodiment.
FIG. 3 is a block diagram showing an abnormality sign diagnosis device.
FIG. 4 is a flowchart showing an example of a navigation management method.
FIG. 5 is a flowchart showing an example of the navigation management method.
FIG. 6 is a flowchart showing an example of an abnormality sign diagnosis method.
FIG. 7 is a diagram showing an example of battery variation information.
FIG. 8 is a diagram showing an example of the battery variation information.
FIG. 9 is a diagram showing an example of the battery variation information.
FIG. 10 is a diagram showing an example of the battery variation information.
FIG. 11 is a diagram showing an example of the battery variation information.
FIG. 12 is a diagram showing multiple pieces of battery variation information used in abnormality sign diagnosis in a second embodiment.
FIG. 13 is a diagram showing a schematic configuration of the navigation management system in a third embodiment.
FIG. 14 is a diagram showing a modification.
FIG. 15 is a block diagram showing the abnormality sign diagnosis device in a fourth embodiment.
FIG. 16 is a flowchart showing an example of the abnormality sign diagnosis method.
FIG. 17 is a block diagram showing the navigation management system in a fifth embodiment.
FIG. 18 is a flowchart showing an example of the navigation management method.
FIG. 19 is a flowchart showing a modification.
FIG. 20 is a diagram showing a power profile of the eVTOL.
FIG. 21 is a block diagram showing a distance calculation unit in a sixth embodiment.
FIG. 22 is a flowchart showing an example of a distance calculation method.
FIG. 23 is a flowchart showing a method for calculating a departure and arrival power amount.
FIG. 24 is a flowchart showing a method for calculating a power consumption rate.
FIG. 25 is a flowchart showing a modification.
FIG. 26 is a flowchart showing a modification.

### DESCRIPTION OF EMBODIMENTS

Hereinafter, multiple embodiments will be described with reference to the drawings. Duplicate descriptions may be omitted by designating corresponding components by the same reference numerals in each embodiment. When only a part of a configuration is described in each embodiment, a configuration of another embodiment described earlier can be applied to the other part of the configuration. Further, in addition to combinations of configurations explicitly shown in the description of the embodiments, the configurations of multiple embodiments can be partially combined even when the combinations are not explicitly shown as long as there is no problem in the combinations in particular.

An abnormality sign diagnosis device, a navigation management system, and a program to be described below are applied to an electric moving object which moves in a horizontal direction and a vertical direction. A movement of the electric moving object may include a movement in a direction having a horizontal direction component and a vertical direction component, that is, in an oblique direction. The electric moving object includes a motor (rotary electric machine) as a drive source for movement. Examples of the electric moving object include an electronic vertical take-off and landing aircraft (eVTOL), an electronic short distance take-off and landing aircraft (eSTOL), a drone, and an electric submarine. The eVTOL is an abbreviation of an electronic vertical take-off and landing aircraft. The eSTOL is an abbreviation of an electronic short distance take-off and landing aircraft. The eVTOL, the eSTOL, and the drone may be referred to as electric flight vehicles.

The electric moving object may be any of a manned aircraft and an unmanned aircraft. In a case of the manned aircraft, the electric moving object is operated by a pilot as an operator. In a case of the unmanned aircraft, the electric moving object may be remotely operated by an operator or may be automatically and remotely operated by a control system. The description of A and/or B means at least one of A and B. That is, the A and/or B can include only A, only B, and both A and B.

### (First Embodiment)

Hereinafter, an example of the eVTOL serving as the electric moving object is shown.

### <Navigation Management System>

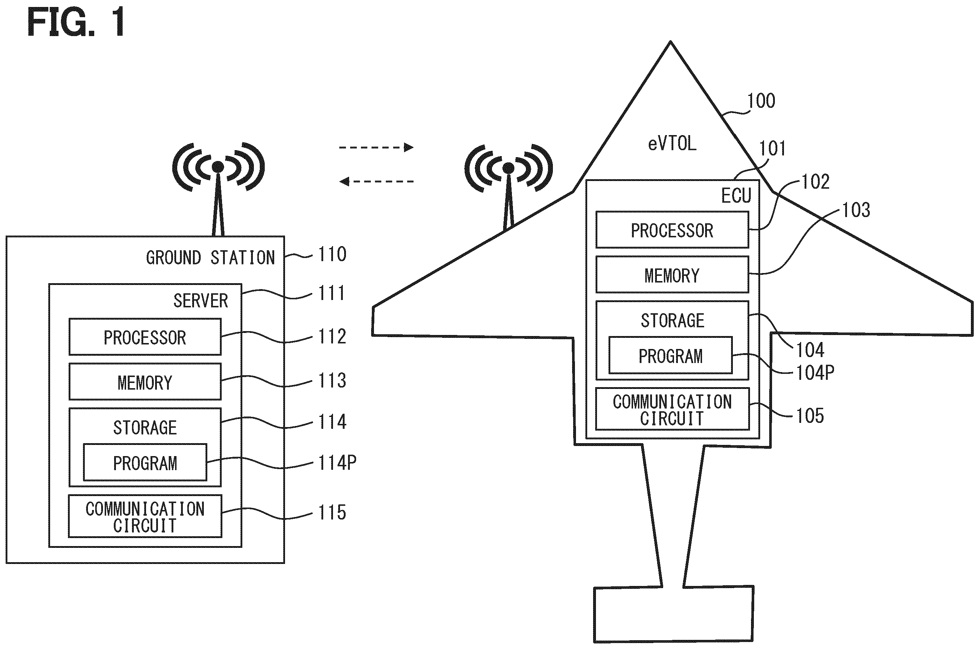

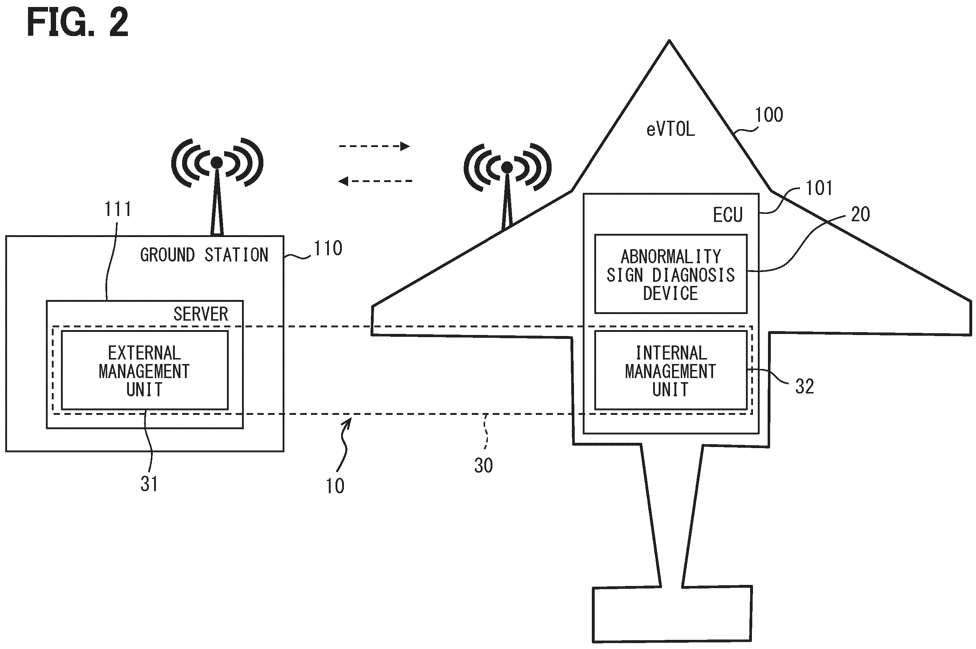

FIG. 1 shows a configuration of the eVTOL and a ground station. FIG. 2 shows a schematic configuration of a navigation management system.

The navigation management system is a system for planning a navigation schedule, monitoring a navigation status, collecting and managing information related to navigation, supporting the navigation, and the like. At least a part of functions of the navigation management system may be arranged in an internal computer of an eVTOL 100 shown in FIG. 1. At least a part of the functions of the navigation management system may be arranged in an external computer that can wirelessly communicate with the eVTOL 100. An example of the external computer is a server 111 of a ground station 110. The ground station 110 can wirelessly communicate with the eVTOL 100. The ground station 110 can wirelessly communicate with other ground stations.

As an example, in the present embodiment, a part of the functions of the navigation management system is arranged in an ECU 101 of the eVTOL 100, and a part of the functions of the navigation management system is arranged in the server 111 of the ground station 110. The functions of the navigation management system are shared between the ECU 101 and the server 111. The ECU is an abbreviation of an electronic control unit.

The ECU 101 includes a processor 102, a memory 103, a storage 104, and a communication circuit 105 for wireless communication. The processor 102 executes various processes by accessing the memory 103. The memory 103 is a rewritable volatile storage medium. The memory 103 is, for example, a RAM. The RAM is an abbreviation of a random access memory. The storage 104 is a rewritable nonvolatile storage medium. The storage 104 stores a program 104P to be executed by the processor 102. The program 104P constructs multiple functional units by causing the processor 102 to execute multiple instructions. The ECU 101 may include multiple processors 102.

Similar to the ECU 101, the server 111 includes a processor 112, a memory 113, a storage 114, and a communication circuit 115. The processor 112 executes various processes by accessing the memory 113. The memory 113 is a rewritable volatile storage medium, for example, a RAM. The storage 114 is a rewritable nonvolatile storage medium. The storage 114 stores a program 114P to be executed by the processor 112. The program 114P constructs multiple functional units by causing the processor 112 to execute multiple instructions. The server 111 may include multiple processors 112.

As shown in FIG. 2, a navigation management system 10 includes an abnormality sign diagnosis device 20 and a navigation management device 30. Hereinafter, the abnormality sign diagnosis device 20 may be simply referred to as the diagnosis device 20. As described above, the navigation management system 10 plans a navigation schedule, monitors a navigation status, collects and manages information related to the navigation, supports the navigation, and the like.

The diagnosis device 20 diagnoses the presence or absence of an abnormality sign of a battery provided to the eVTOL 100, and outputs information related to the abnormality sign. As an example, the diagnosis device 20 of the present embodiment is functionally disposed in the ECU 101 of the eVTOL 100. Details of the diagnosis device 20 will be described later.

The navigation management device 30 has functions other than a function of calculating a cruising distance among the functions of the navigation management system 10. The navigation management device 30 manages navigation of the eVTOL 100 and executes a predetermined process based on the information output by the diagnosis device 20. The navigation management device 30 plans a navigation schedule by, for example, input from a terminal (not shown).

As an example, the navigation management device 30 of the present embodiment includes an external management unit 31 and an internal management unit 32. The external management unit 31 is functionally disposed in the server 111 of the ground station 110. The internal management unit 32 is functionally disposed in the ECU 101 of the eVTOL 100. In this way, a part of the functions of the navigation management device 30 is arranged in the server 111, and the other part of the functions is arranged in the ECU 101. The external management unit 31 and the internal management unit 32 can wirelessly communicate with each other. The internal management unit 32 can communicate with various devices arranged in the eVTOL 100 in a wired or wireless manner.

### <Abnormality Sign Diagnosis device>

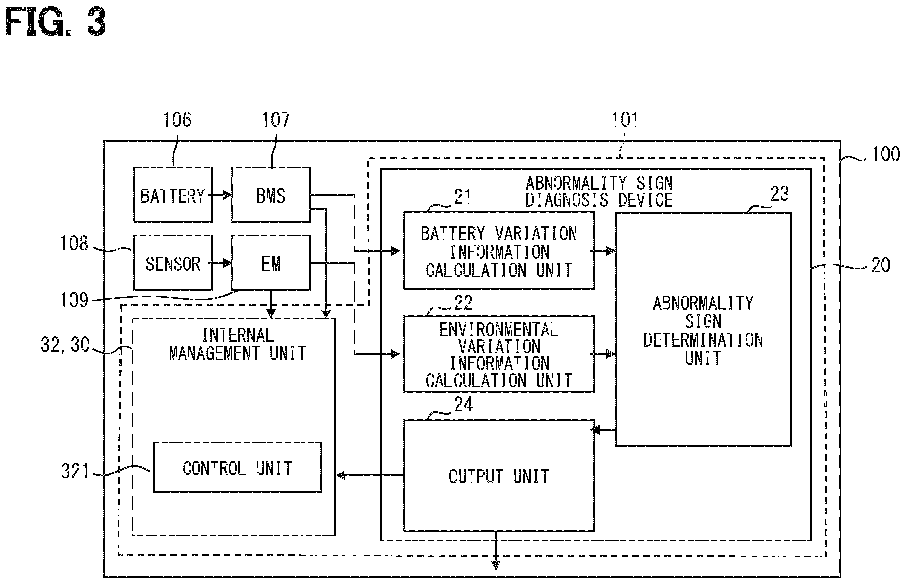

FIG. 3 shows functional blocks of the diagnosis device 20. As shown in FIG. 3, the eVTOL 100 includes batteries 106, a BMS 107, a sensor 108, and an environment monitor (EM) 109, in addition to the ECU 101.

Each of the batteries 106 is a rechargeable secondary battery capable of storing DC power. The secondary battery is, for example, a lithium-ion battery and a nickel-hydrogen battery. As the battery 106, a fuel cell, a generator, or the like may be used in addition to the secondary battery. The battery 106 supplies electric power to an electric propulsion unit (EPU) and an auxiliary machine which are not shown, the ECU 101, and the like. The EPU is an abbreviation of an electric propulsion unit. The EPU includes a motor and an inverter, and rotationally drives a propeller (not shown) which applies a propulsive force to the eVTOL 100.

The eVTOL 100 includes multiple batteries 106. The multiple batteries 106 are connected to each other in series and/or in parallel. The batteries 106 may be referred to as a battery module or a battery pack. The battery pack includes at least one battery module. That is, one battery module may be referred to as a battery pack, and one battery pack may include multiple battery modules. Each of the batteries 106 includes multiple battery cells connected in series or includes multiple battery cells connected in parallel and in series.

The BMS 107 monitors a state of the batteries 106. The BMS 107 is an abbreviation of a battery management system. For example, one BMS 107 is provided for one battery 106.

The sensor 108 detects an environmental parameter. The sensor 108 may be referred to as an environmental sensor. The sensor 108 may include a sensor which detects an altitude of the eVTOL 100, that is, a position in a vertical direction. The sensor 108 may include a sensor which detects an atmospheric pressure, that is, an external pressure. The environment monitor 109 acquires a detection signal of the sensor 108, executes a predetermined process, and monitors the environmental parameter. The environment monitor 109 converts, for example, the detection signal (electric signal) into a pressure unit.

As an example, as shown in FIG. 3, the diagnosis device 20 of the present embodiment includes a battery variation information calculation unit 21, an environmental variation information calculation unit 22, an abnormality sign determination unit 23, and an output unit 24. Hereinafter, the battery variation information calculation unit 21 may be simply referred to as the battery calculation unit 21. The environmental variation information calculation unit 22 may be simply referred to as the environment calculation unit 22. The abnormality sign determination unit 23 may be simply referred to as the determination unit 23.

The battery calculation unit 21 acquires battery information related to a battery parameter and calculates battery variation information which is variation information of the battery parameter. The battery variation information includes variation information of at least one of a temperature of the battery 106, a charging and discharging current, a dimension of the battery 106, an internal pressure of the battery 106, and a gas concentration. The battery variation information is, for example, a variation amount of the battery parameter in a predetermined period. The battery variation information may be a variation amount of a second parameter based on a unit variation amount of a first parameter.

As an example, the battery calculation unit 21 acquires the battery information from the BMS 107 and calculates the battery variation information. The battery calculation unit 21 acquires information of each corresponding battery 106 from the BMS 107. The battery information may be acquired in a unit of the battery pack, a unit of the battery module, or a unit of the battery cell. The battery information may include identification information for the battery cell, the battery module, and the battery pack.

The battery calculation unit 21 may acquire the battery information from the navigation management device 30 (for example, the internal management unit 32) instead of the BMS 107. The battery information may be acquired from an ECU (not shown) which controls the battery 106. The battery calculation unit 21 may calculate the battery variation information based on information acquired from a sensor (not shown) which detects the state of the battery 106.

The environment calculation unit 22 acquires environmental information related to the environmental parameter and calculates environmental variation information which is variation information of the environmental parameter. The environmental variation information includes variation information of the altitude and/or the atmospheric pressure of the eVTOL 100. The environmental variation information is a variation amount of the environmental parameter in a predetermined period.

As an example, the environment calculation unit 22 acquires the environmental information from the environment monitor 109 and calculates the environmental variation information. The environmental information may include identification information for an information provider such as the sensor 108. The environment calculation unit 22 may acquire the environmental information from the navigation management device 30 (for example, the internal management unit 32) instead of the environment monitor 109. The environment calculation unit 22 may calculate the environmental variation information based on the information acquired from the sensor 108.

The determination unit 23 acquires the battery variation information and the environmental variation information, and determines the presence or absence of an abnormality sign of the battery 106 based on the variation information. A method for determining the presence or absence of the abnormality sign will be described later.

The output unit 24 outputs the information related to the abnormality sign to an outside of the diagnosis device 20. As an example, the output unit 24 outputs the information related to the abnormality sign to an internal display device of the eVTOL 100 and/or a display device of the ground station 110. Accordingly, an onboard crew member, a staff member of the ground station 110, or the like can confirm the presence or absence of the abnormality sign.

As an example, the output unit 24 outputs an authentication result corresponding to a determination result acquired from the determination unit 23 to the navigation management device 30. When there is no abnormality sign, the output unit 24 outputs an authentication result indicating that there is no abnormality sign. When there is an abnormality sign, the output unit 24 outputs an authentication result indicating that there is an abnormality sign.

The above configuration is merely an example. The diagnosis device 20 may include at least the determination unit 23 and the output unit 24. The diagnosis device 20 may include at least the determination unit 23 and at least one of the battery calculation unit 21 and the environment calculation unit 22.

The diagnosis device 20 may acquire the battery variation information calculated by the outside, for example, the BMS 107 or the navigation management device 30. The diagnosis device 20 may include a battery variation information acquisition unit instead of the battery variation information calculation unit 21, or the determination unit 23 may acquire the battery variation information calculated by the outside.

The diagnosis device 20 may acquire the environmental variation information calculated by the outside, for example, the environment monitor 109 or the navigation management device 30. The diagnosis device 20 may include an environmental variation information acquisition unit instead of the environmental variation information calculation unit 22, or the determination unit 23 may acquire the environmental variation information calculated by the outside.

### <Navigation Management Device>

As shown in FIG. 3, as an example, the internal management unit 32 of the navigation management device 30 includes a control unit 321.

The control unit 321 controls devices mounted on the eVTOL 100, for example, the EPU and the auxiliary machine which are not shown. The control unit 321 may control driving of the inverter and the motor constituting the EPU according to a control signal from a flight control device (not shown) provided to the eVTOL 100. The control unit 321 may perform flight control. In this case, the control unit 321 executes various processes related to the flight control. The various processes include, for example, a process of generating a control signal indicating a target rotation speed of the propeller, in order to implement an instructed flight state. Further, the various processes include a process of generating a control signal indicating a target tilt angle of the propeller, and a process of generating a control signal indicating a target position of a flap (not shown) for adjusting lift of the eVTOL 100. The control unit 321 executes the above-described various processes, and causes the eVTOL 100 to fly in a flight state corresponding to an operation of the operator or a remote operation of the control system.

The control unit 321 controls, for example, an air conditioner as the auxiliary machine. The control unit 321 acquires, from each sensor mounted in the eVTOL 100, inside air information indicating an internal temperature and humidity and outside air information indicating an external temperature and humidity. The control unit 321 acquires setting information such as a set temperature set by an input terminal. The control unit 321 controls the air conditioner based on the inside air information, the outside air information, and the setting information.

The control unit 321 of the present embodiment performs, based on the information related to the abnormality sign output from the diagnosis device 20, predetermined control for enhancing safety of the navigation. As an example, the control unit 321 performs power distribution control and/or power saving control on the battery 106. Details of the control will be described later.

The above configuration is merely an example. Although the example in which the internal management unit 32 includes the control unit 321 has been described, the present invention is not limited thereto. The external management unit 31 may include the control unit 321. The predetermined control for enhancing the safety of the navigation is not limited to the example described above. For example, control for determining navigation permission may be performed based on the information related to the abnormality sign. A function of controlling the navigation permission is arranged in, for example, the external management unit 31.

### <Navigation Management Method>

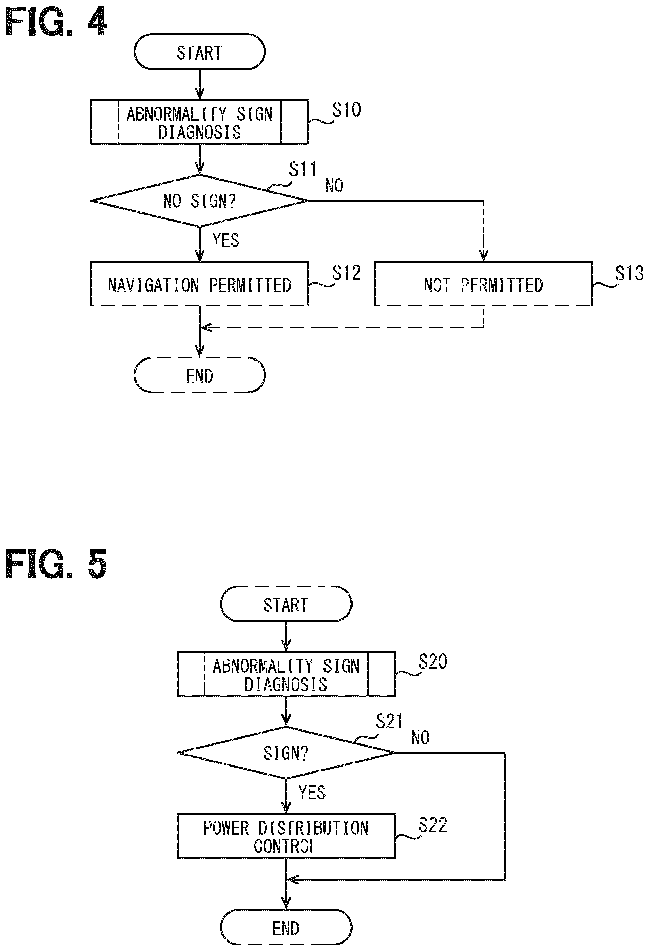

FIG. 4 shows an example of a process to be performed by the navigation management system before a take-off. The "before a take-off" may include a time of planning a navigation schedule. FIG. 5 shows an example of a process to be executed by the navigation management system during the flight. The execution of the programs 104P and 114P for navigation management by the processors 102 and 112 corresponds to execution of a navigation management method. At least a part of the programs 104P and 114P for the navigation management may be stored in the corresponding storages 104 and 114 using, for example, an OTA technique. The OTA is an abbreviation of over the air.

The navigation management system 10 executes the process shown in FIG. 4 before the take-off. First, the diagnosis device 20 performs a diagnosis processing of an abnormality sign of the battery 106 (step S10). The diagnosis device 20 determines the presence or absence of an abnormality sign and outputs the information related to the abnormality sign. An example of the information related to the abnormality sign is a determination result of the presence or absence of the abnormality sign, that is, the authentication result. An abnormality sign diagnosis processing method will be described later.

Next, the external management unit 31 of the navigation management device 30 performs, based on the acquired abnormality sign information (authentication result), the navigation permission control to enhance the safety of the navigation. The navigation management device 30 determines whether the authentication result indicates that there is no abnormality sign (step S11), and permits the navigation when there is no abnormality sign (step S12). Accordingly, the flight of a target aircraft is possible. Then, the navigation management system 10 ends the series of processing.

On the other hand, when the acquired authentication result indicates that there is an abnormality sign, the navigation management device 30 does not permit the navigation (step S13) and ends the series of processing. The eVTOL 100 whose navigation is determined not to be permitted cannot take off. The navigation management device 30 may output information indicating non-permission to, for example, the display device of the eVTOL 100 or the display device of the ground station 110. The navigation management device 30 may notify the target eVTOL 100 or the ground station 110 of information indicating that maintenance is required. In the eVTOL 100 whose navigation is determined not to be permitted, for example, when it is determined that there is no abnormality sign in the abnormality sign diagnosis after completion of the maintenance, the navigation is permitted to make the flight possible. Instead of the external management unit 31, the internal management unit 32 may perform the navigation permission control.

The navigation management system 10 executes the process shown in FIG. 5 during the flight. The navigation management system 10 repeatedly performs the process shown in FIG. 5 at a predetermined cycle during the flight, for example.

First, the diagnosis device 20 performs diagnosis processing of the abnormality sign of the battery 106 (step S20). The processing in step S20 is similar to the processing in step S10.

Next, the internal management unit 32 of the navigation management device 30 determines whether the acquired abnormality sign information (authentication result) indicates that there is an abnormality sign (step S21), and ends a series of processing when there is no abnormality sign.

On the other hand, when the acquired authentication result indicates that there is an abnormality sign, the navigation management device 30 performs power distribution control as an example of the control for enhancing the safety of the navigation (step S22), and ends the series of processing. The processing in steps S21 and S22 corresponds to the control unit 321.

As the power distribution control, the navigation management device 30 controls power distribution of each battery 106 to reduce a power load of an abnormal battery, for example. Accordingly, a possibility that an abnormality occurrence timing of the battery 106 is shifted backward can be improved. As the power distribution control, the navigation management device 30 may perform control of distributing power of the battery 106 having an abnormality sign to another battery 106, that is, the battery 106 having no abnormality sign. Accordingly, remaining power can be effectively utilized when the navigation is continued by the batteries 106 other than the abnormal battery. The safety can be enhanced by discharging the abnormal battery.

The navigation management device 30 may perform control of continuing the navigation using only the power of the normal batteries 106 without using the battery 106 having an abnormality sign when there is an abnormality sign. For example, the navigation management device 30 can disconnect only the battery 106 having an abnormality sign from a power path by instructing the battery control ECU to turn off a relay (not shown).

In addition to or instead of the power distribution control described above, power saving control for devices in the eVTOL 100 may be performed. The navigation management device 30 may stop the auxiliary machine such as the air conditioner for a certain period of time within a range in which no problem occurs even if the stop is performed. The navigation management device 30 may switch an operation mode of the EPU from a normal mode to a power saving mode. In order to reduce a power consumption rate, control for changing a route and/or the altitude to an optimum one may be performed.

### <Abnormality Sign Diagnosis method>

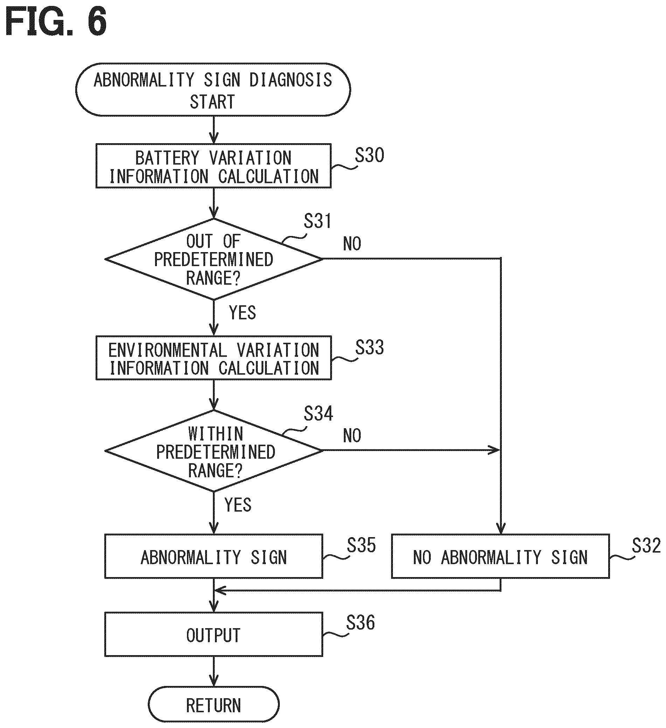

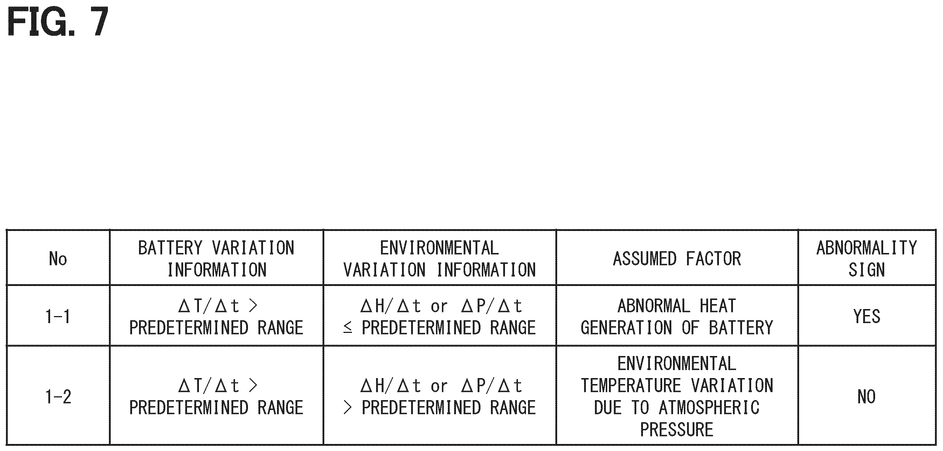

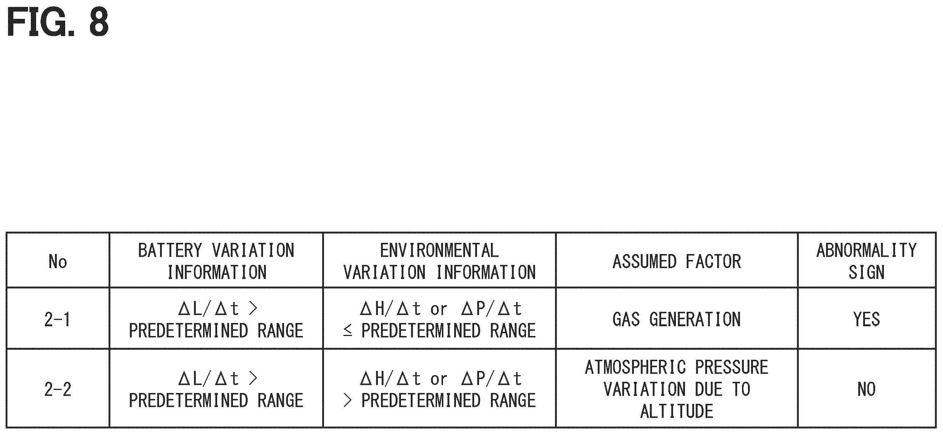

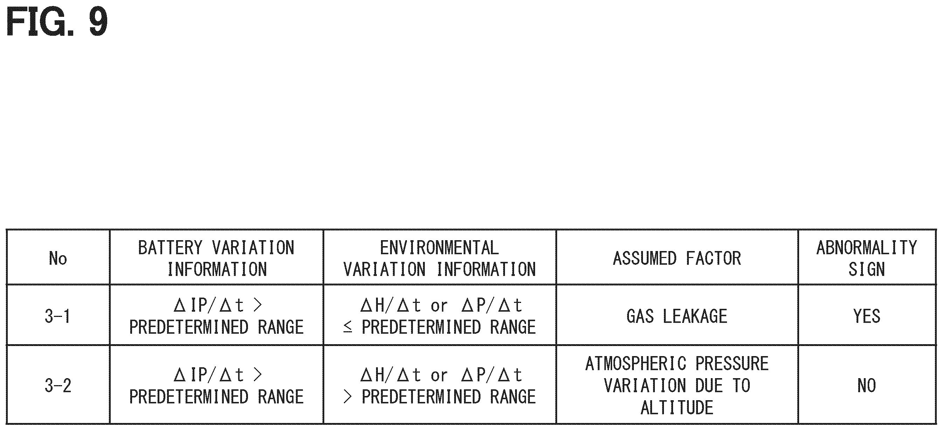

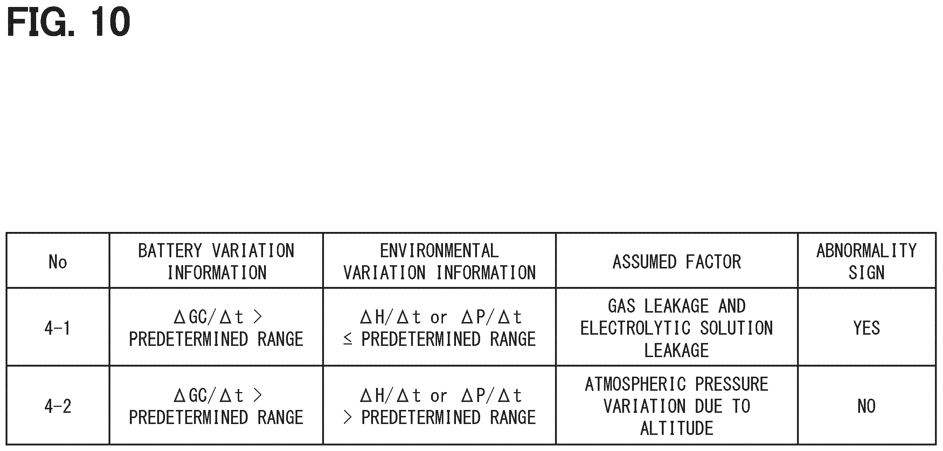

FIG. 6 shows the processing common to steps S10 and S20, that is, an abnormality sign diagnosis method. FIGS. 7 to 11 show several examples of the battery variation information. FIG. 7 shows an example of a battery temperature as the battery parameter. FIG. 8 shows an example of a dimension (outer dimension) of the battery cell as the battery parameter. FIG. 9 shows an example of a pressure in the battery as the battery parameter. FIG. 10 shows an example of an organic gas concentration in the battery as the battery parameter.

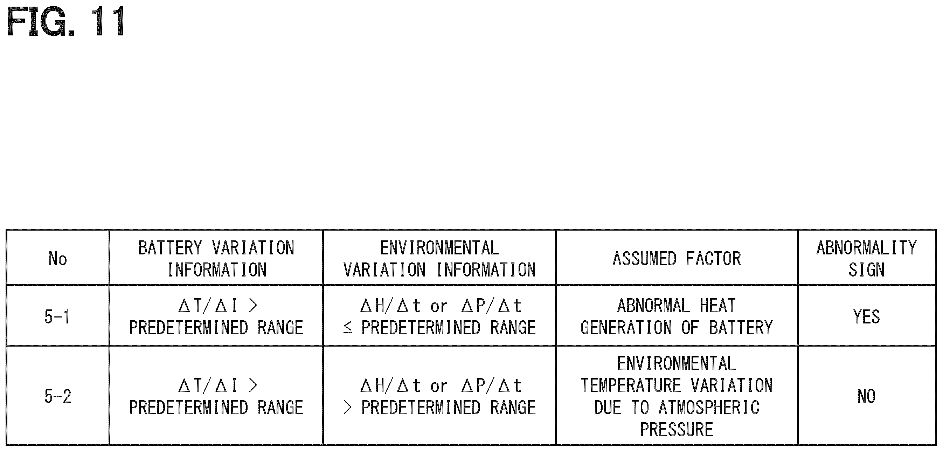

FIGS. 7 to 10 each show an example of the variation information of the battery parameter in a predetermined period, that is, time-varying information, as the battery variation information. FIG. 11 shows an example of a ratio between a variation amount of the charging and discharging current and a variation amount of the battery temperature in a predetermined period, that is, the variation amount of the battery temperature based on the variation amount of the charging/discharging current, as the battery variation information. The variation amount is a difference between a maximum value and a minimum value in a predetermined period (predetermined time).

In an electric moving object such as the eVTOL 100 that also moves in the vertical direction, an environmental change accompanying the movement in the vertical direction affects the battery parameter. For example, in a case of the eVTOL 100, when the altitude increases, the atmospheric pressure and the outside air temperature decrease. The diagnosis device 20 determines the presence or absence of the abnormality sign of the battery 106 based on the battery variation information and the environmental variation information.

As shown in FIG. 6, the diagnosis device 20 first calculates the battery variation information (step S30), and the processing in step S30 corresponds to the battery variation information calculation unit 21. The diagnosis device 20 acquires information (battery information) related to the battery parameter from the outside, for example, the BMS 107. The diagnosis device 20 acquires the battery information in a predetermined period. The diagnosis device 20 calculates the battery variation information based on the acquired battery information. The battery variation information includes variation information of at least one of the temperature, the charging and discharging current, the dimension, the internal pressure, and the gas concentration of the battery 106.

As an example, the diagnosis device 20 calculates temperature variation information (ΔT/Δt) which is a variation amount (ΔT) of the battery temperature in a predetermined period (Δt). The diagnosis device 20 calculates dimension variation information (ΔL/Δt) which is a variation amount (ΔL) of the dimension of the battery 106 in a predetermined period (Δt). The diagnosis device 20 calculates internal pressure variation information that is a variation amount (ΔIP) of the internal pressure of the battery 106 in a predetermined period (Δt). The diagnosis device 20 calculates concentration variation information (ΔGC/Δt) for calculating a variation amount (ΔGC) of the organic gas concentration in the battery in a predetermined period (Δt). The diagnosis device 20 calculates the temperature variation information (ΔT/ΔI) which is a ratio between a variation amount (ΔI) of the charging and discharging current and a variation amount (ΔT) of the battery temperature in a predetermined period.

Next, the diagnosis device 20 determines whether the battery variation information is out of a predetermined range (step S31). The predetermined range may be referred to as a battery threshold. The predetermined range is stored in the storage in advance. The predetermined range is appropriately set such that the presence or absence of an abnormality sign regarding an assumed factor can be determined based on the battery variation information. When the battery variation information is within the predetermined range, that is, when the battery variation information is equal to or less than the battery threshold, the diagnosis device 20 determines that there is no abnormality sign (step S32), and proceeds to step S36. The processing in steps S31 and S32 corresponds to the determination unit 23.

When the temperature variation information (ΔT/Δt) is within the predetermined range, the diagnosis device 20 determines that there is no abnormality sign regarding abnormal heat generation of the battery 106. When the temperature variation information (ΔT/Δt) is out of the predetermined range, the diagnosis device 20 determines that there is a possibility of an abnormality sign related to the abnormal heat generation, and proceeds to step S33.

When the dimension variation information (ΔL/Δt) is within the predetermined range, the diagnosis device 20 determines that there is no abnormality sign regarding rapid gas generation inside the battery cell. When the dimension variation information (ΔL/Δt) is out of the predetermined range, the diagnosis device 20 determines that there is a possibility of an abnormality sign related to the gas generation, and proceeds to step S33.

When the internal pressure variation information (ΔIP/Δt) is within the predetermined range, the diagnosis device 20 determines that there is no abnormality sign regarding gas leakage from the battery cell. When the internal pressure variation information (ΔIP/Δt) is out of the predetermined range, the diagnosis device 20 determines that there is a possibility of an abnormality sign related to the gas leakage, and proceeds to step S33.

When the concentration variation information (ΔGC/Δt) is within the predetermined range, the diagnosis device 20 determines that there is no abnormality sign regarding gas leakage and/or electrolytic solution leakage from the battery cell. When the concentration variation information (ΔGC/Δt) is out of the predetermined range, the diagnosis device 20 determines that there is a possibility of an abnormality sign related to the gas leakage and/or electrolytic solution leakage, and proceeds to step S33.

When the temperature variation information (ΔT/ΔI) is within the predetermined range, the diagnosis device 20 determines that there is no abnormality sign regarding the abnormal heat generation of the battery 106. When the temperature variation information (ΔT/ΔI) is out of the predetermined range, the diagnosis device 20 determines that there is a possibility of an abnormality sign related to the abnormal heat generation, and proceeds to step S33.

In step S33, the diagnosis device 20 calculates the environmental variation information. The processing in step S33 corresponds to the environmental variation information calculation unit 22. The diagnosis device 20 acquires information (environmental information) related to the environmental parameter from the outside, for example, the environment monitor 109. The diagnosis device 20 acquires the environmental information in a predetermined period. The diagnosis device 20 calculates the environmental variation information based on the acquired environmental information. As an example, the environmental variation information includes variation information of the altitude or atmospheric pressure of the eVTOL 100. The environmental variation information is a variation amount of the environmental parameter in a predetermined period. The diagnosis device 20 acquires the battery parameter and the environmental parameter in a period common to each other, and calculates the battery variation information and the environmental variation information.

As an example, the diagnosis device 20 calculates altitude variation information (ΔH/Δt) which is a variation amount (ΔH) of the altitude of the eVTOL 100 in a predetermined period (Δt). The diagnosis device 20 calculates atmospheric pressure variation information (ΔP/Δt) which is a variation amount (ΔP) of an external pressure of the eVTOL 100, that is, the atmospheric pressure, in a predetermined period (Δt).

Next, the diagnosis device 20 determines whether the environmental variation information is within a predetermined range (step S34). The predetermined range may be referred to as an environmental threshold. The predetermined range is stored in the storage in advance. The predetermined range is appropriately set such that whether there is an assumed factor can be determined.

When the environmental variation information is out of the predetermined range, that is, when the environmental variation information exceeds the environmental threshold, the diagnosis device 20 determines that an influence of the environmental variation on the fact that the battery variation information is out of the predetermined range is large, and executes the processing in step S32, that is, determines that there is no abnormality sign. On the other hand, when the environmental variation information is within the predetermined range, that is, when the environmental variation information is not out of the environmental threshold, the diagnosis device 20 determines that the influence of the environmental variation on the fact that the battery variation information is out of the predetermined range is small. Then, it is determined that there is an abnormality sign in the battery 106 (step S35). The processing in steps S34 and S35 corresponds to the determination unit 23.

As shown in No. 1-1 of FIG. 7, when the temperature variation information (ΔT/Δt) is out of the predetermined range and the environmental variation information (ΔH/Δt or ΔP/Δt) is within the predetermined range, the diagnosis device 20 determines that there is the abnormality sign related to the abnormal heat generation of the battery 106. As shown in No. 1-2, when the environmental variation information is out of the predetermined range, the diagnosis device 20 determines that there is no abnormality sign related to the abnormal heat generation even when the temperature variation information is outside the predetermined range.

As shown in No. 2-1 of FIG. 8, when the dimension variation information (ΔL/Δt) is out of the predetermined range and the environmental variation information (ΔH/Δt or ΔP/Δt) is within the predetermined range, the diagnosis device 20 determines that there is the abnormality sign related to the rapid gas generation inside the battery cell. As shown in No. 2-2, when the environmental variation information is out of the predetermined range, the diagnosis device 20 determines that there is no abnormality sign related to the gas generation even when the dimension variation information is outside the predetermined range.

As shown in No. 3-1 of FIG. 9, when the internal pressure variation information (ΔIP/Δt) is out of the predetermined range and the environmental variation information (ΔH/Δt or ΔP/Δt) is within the predetermined range, the diagnosis device 20 determines that there is the abnormality sign related to the gas leakage from the battery cell. As shown in No. 3-2, when the environmental variation information is out of the predetermined range, the diagnosis device 20 determines that there is no abnormality sign related to the gas leakage even when the internal pressure variation information is outside the predetermined range.

As shown in No. 4-1 of FIG. 10, when the concentration variation information (ΔGC/Δt) is out of the predetermined range and the environmental variation information (ΔH/Δt, or ΔP/Δt) is within the predetermined range, the diagnosis device 20 determines that there is the abnormality sign related to the gas leakage and/or the electrolytic solution leakage from the battery cell. As shown in No. 4-2, when the environmental variation information is out of the predetermined range, the diagnosis device 20 determines that there is no abnormality sign related to the gas leakage and/or the electrolytic solution leakage even when the concentration variation information is outside the predetermined range.

As shown in No. 5-1 of FIG. 11, when the temperature variation information (ΔT/ΔI) is out of the predetermined range and the environmental variation information (ΔH/Δt or ΔP/Δt) is within the predetermined range, the diagnosis device 20 determines that there is the abnormality sign related to the abnormal heat generation of the battery 106. As shown in No. 5-2, when the environmental variation information is out of the predetermined range, the diagnosis device 20 determines that there is no abnormality sign related to the abnormal heat generation even when the temperature variation information is outside the predetermined range.

Next, the diagnosis device 20 outputs information related to the abnormality sign (step S36), and ends the series of processing. The processing in step S36 corresponds to the output unit 24. As an example, the diagnosis device 20 outputs a result of the authentication in steps S32 and S35 as the abnormality sign information.

The abnormality sign diagnosis method described above is merely an example. The environmental variation information may be calculated before the battery variation information is calculated. The processing related to the battery variation information and the processing related to the environmental variation processing may be performed in parallel. That is, the processing in steps S30 and S33 may be performed substantially simultaneously, and the processing in steps S31 and S34 may be performed substantially simultaneously. By performing the processing simultaneously, a speed of the abnormality sign diagnosis processing can be increased. Meanwhile, the sequential processing as shown in FIG. 6 can reduce a memory load.

The diagnosis device 20 may use a predicted altitude in the navigation schedule, an atmospheric pressure estimation value based on weather information, or the like as the environmental variation information. The diagnosis device 20 may acquire the navigation schedule and the weather information from the external management unit 31 of the navigation management device 30, for example. Both the altitude variation information (ΔH/Δt) and the atmospheric pressure variation information (ΔP/Δt) may be used as the environmental variation information. For example, when the battery variation information is out of the predetermined range and both the altitude variation information and the atmospheric pressure variation information are outside the predetermined ranges, it may be determined that there is no abnormality sign.

The battery variation information is not limited to the above example. For example, current variation information (ΔI/Δt) which is a variation amount (ΔI) of the charging and discharging current in a predetermined period (Δt) may be used.

A threshold (predetermined range) for the battery variation information may be a predetermined value (constant value) or may be set in consideration of deterioration of the battery 106. The diagnosis device 20 may set the threshold based on, for example, a map indicating a relationship between the battery degradation and the threshold.

### <Summary of First Embodiment>

As described above, in a case of the electric moving object that moves in the horizontal direction and the vertical direction, the variation of the environmental parameter accompanying the movement in the vertical direction affects the battery parameter. According to the diagnosis device 20 (abnormality sign diagnosis device 20) of the present embodiment, not only the battery variation information but also the environmental variation information is used for the determination of the presence or absence of the abnormality sign of the battery 106. That is, the presence or absence of the abnormality sign is determined in consideration of the influence of the environmental variation on the battery variation. Accordingly, only a sign of an abnormality inherent in the battery can be determined. Accordingly, accuracy of the abnormality sign can be improved for the electric moving object which moves in the horizontal direction and the vertical direction. For example, erroneous determination that there is an abnormality sign due to the influence of environmental variation can be prevented. By outputting the information including the determination result of the presence or absence of the abnormality sign, the presence or absence of an emergency response, a maintenance timing, and the like can be appropriately set.

For example, in a case of the eVTOL 100, the atmospheric pressure decreases as the altitude increases. The outside air temperature also decreases due to the decrease in the atmospheric pressure. In a case of the electric submarine, the deeper the depth, the higher the water pressure and the lower the water temperature. As described above, a variation of the altitude (position in the vertical direction) or the atmospheric pressure (external pressure) tends to affect the variation of the battery parameter, specifically, a variation of basic data or safety data of the battery. As an example, the diagnosis device 20 uses, as the environmental variation information, variation information of the position in the vertical direction and/or external pressure of the electric moving object. Accordingly, the accuracy of the abnormality sign can be further improved.

The battery abnormality includes multiple abnormal modes such as the abnormal heat generation due to short circuit or overcharge, the rapid gas generation inside the battery cell, and the gas leakage and electrolytic solution leakage from the battery cell. As an example, the diagnosis device 20 uses variation information of at least one of the battery temperature, the charging and discharging current, the dimension, the internal pressure, and the gas concentration as the battery variation information. By using appropriate battery variation information, sign diagnosis of multiple abnormality modes can be accurately performed.

The navigation management system 10 of the present embodiment includes the diagnosis device 20 and the navigation management device 30. The diagnosis device 20 uses not only the battery variation information but also the environmental variation information to determine the presence or absence of the abnormality sign of the battery 106. As a result, the accuracy of the abnormality sign can be improved for the electric moving object which moves in the horizontal direction and the vertical direction. Accordingly, safety of the navigation can be enhanced.

The navigation management device 30 performs, based on the information related to the abnormality sign, predetermined control for ensuring the safety of the navigation. As an example, the navigation management device 30 performs the navigation permission control based on the determination result of the abnormality sign of the battery 106. The navigation management device 30 permits the navigation when there is no abnormality sign, and does not permit the navigation when there is an abnormality sign. Since the navigation is permitted based on the authentication result that there is no abnormality sign before the take-off, the safety of the navigation can be further enhanced.

The program 104P of the present embodiment is applied to the electric moving object which moves in the horizontal direction and the vertical direction. The program 104P includes causing at least one processor 102 (processing unit) to determine the presence or absence of the abnormality sign of the battery based on the battery variation information which is variation information of the battery 106 in the electric moving object and the environmental variation information which is variation information of the environmental parameter, and outputting the information related to the abnormality sign. The program 104P uses not only the battery variation information but also the environmental variation information to determine the presence or absence of the abnormality sign of the battery 106. As a result, the accuracy of the abnormality sign can be improved for the electric moving object which moves in the horizontal direction and the vertical direction.

### (Second Embodiment)

This embodiment is a modification of a basic aspect of the preceding embodiment, and the description of the preceding embodiment can be incorporated. In the preceding embodiment, the presence or absence of the abnormality sign is determined using one piece of the battery variation information and one piece of the environmental variation information. Alternatively, the presence or absence of the abnormality sign may be determined by using multiple pieces of the battery variation information and multiple pieces of the environmental variation information.

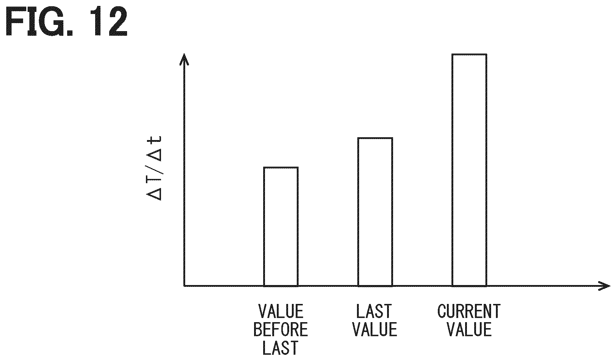

In the diagnosis device 20 according to the present embodiment, the battery calculation unit 21 stores the battery variation information obtained by the calculation into the memory. As shown in FIG. 12, for example, the battery calculation unit 21 uses multiple pieces of the battery variation information to calculate one piece of battery variation information to be output to the determination unit 23. In the example shown in FIG. 12, as the temperature variation information (ΔT/Δt), three pieces of information including a current value obtained by current calculation, and the last value and the value before the last which are stored in the memory are used.

The battery calculation unit 21 may output, for example, an average value of the three values to the determination unit 23. The battery calculation unit 21 may compare the three calculation values, for example, and output the calculation values to the determination unit 23 after excluding an abnormal value occurring due to noise superimposition or the like. For example, a certain calculation value may be compared with an average value of the remaining calculation values, and an abnormal value may be determined when the certain calculation value is out of a predetermined range which is based on the average value. When there are multiple remaining calculation values excluding the abnormal value, for example, an average value may be output, or a minimum value or a maximum value among the remaining calculation values may be output. When there is one remaining calculation value, the remaining calculation value may be output.

The environment calculation unit 22 also has a similar configuration as the battery calculation unit 21. The environment calculation unit 22 stores the environmental variation information obtained by the calculation into the memory. The environment calculation unit 22 uses multiple pieces of the environmental variation information to calculate one piece of environmental variation information to be output to the determination unit 23. Other configurations are the same as those described in the preceding embodiment.

### <Summary of Second Embodiment>

In the present embodiment, during determination of the presence or absence of the abnormality sign, multiple pieces of the battery variation information and multiple pieces of the environmental variation information are used. Accordingly, erroneous determination due to noise or the like can be prevented, and the accuracy of the abnormality sign can be improved.

The number of pieces of battery variation information and the number of pieces of environmental variation information used for determining the presence or absence of the abnormality sign are not limited to three. The number of pieces may be multiple. The number of pieces may be two, or may be four or more.

An example in which the battery calculation unit 21 calculates one piece of battery variation information from multiple calculation values has been described, but the present invention is not limited thereto. Another part of the diagnosis device 20 may have a function of calculating one piece of battery variation information. For example, the determination unit 23 may have a function of calculating one piece of battery variation information. The same applies to the environment calculation unit 22.

### (Third Embodiment)

This embodiment is a modification of a basic aspect of the preceding embodiment, and the description of the preceding embodiment can be incorporated. In the preceding embodiment, the diagnosis device is functionally disposed in the ECU of the eVTOL. Alternatively, the diagnosis device may be functionally disposed in a computer other than the ECU.

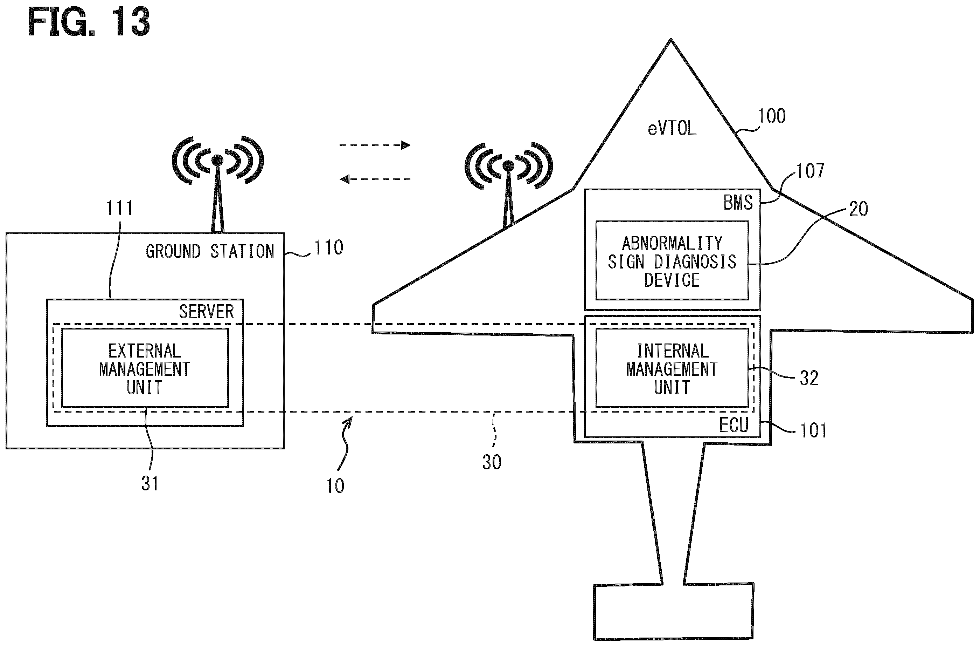

FIG. 13 shows a functional arrangement of the navigation management system 10 according to the present embodiment. The diagnosis device 20 is functionally disposed in the BMS 107. The BMS 107 also includes a processor, a RAM, and a storage storing a program, which are not shown. As in the preceding embodiment, the external management unit 31 of the navigation management device 30 is functionally disposed in the server 111 of the ground station 110. The internal management unit 32 is functionally disposed in the ECU 101. Other configurations are the same as those described in the preceding embodiment.

### <Summary of Third Embodiment>

In the present embodiment, in the eVTOL 100, the diagnosis device 20 is disposed in the BMS 107, and the internal management unit 32 of the navigation management device 30 is disposed in the ECU 101. In the configuration in which the functions are shared as described above, the same effect as the configuration described in the preceding embodiment can also be obtained.

For example, the diagnosis device 20 functionally disposed in the BMS 107 uses the environmental variation information for diagnosing the abnormality sign. Accordingly, the accuracy of the abnormality sign of the battery 106 can be improved for the electric moving object which moves in the horizontal direction and the vertical direction.

### <Modification>

As described in the preceding embodiment, at least a part of the functions of the navigation management system 10 may be disposed in the internal computer of the eVTOL 100. At least a part of the functions of the navigation management system 10 may be disposed in an external computer that can wirelessly communicate with the eVTOL 100. For example, all of the functions may be arranged in the eVTOL 100, or all of the functions may be arranged in the server 111 of the ground station 110.

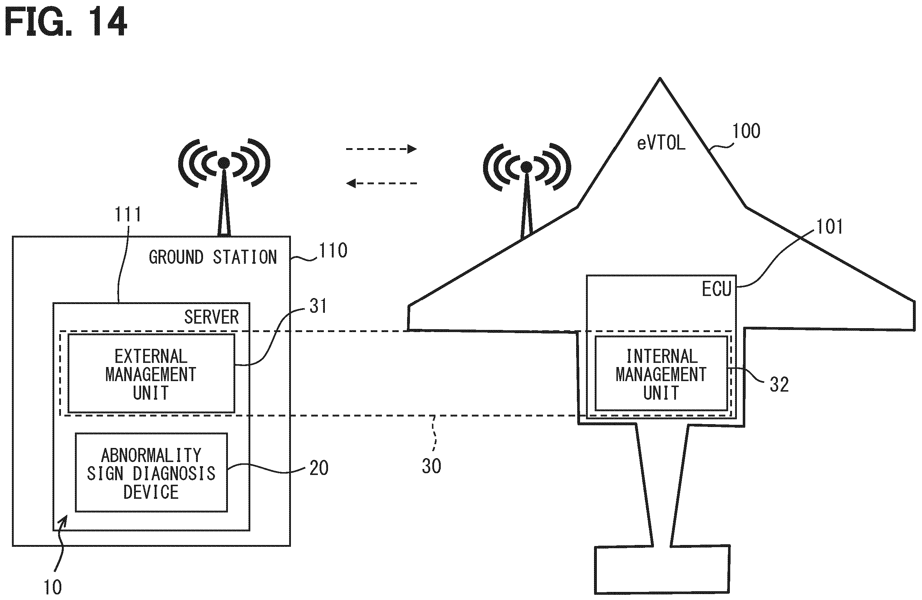

For example, as shown in FIG. 14, the diagnosis device 20 may be functionally disposed in the server 111 of the ground station 110. In FIG. 14, the abnormality sign diagnosis device 20 and the external management unit 31 are arranged in the server 111. The internal management unit 32 is disposed in the ECU 101 of the eVTOL 100.

### (Fourth Embodiment)

This embodiment is a modification of a basic aspect of the preceding embodiment, and the description of the preceding embodiment can be incorporated. In the preceding embodiment, the presence or absence of the abnormality sign is determined. Alternatively, not only the presence or absence of the abnormality sign is determined, but also an occurrence timing of the abnormality may be predicted.

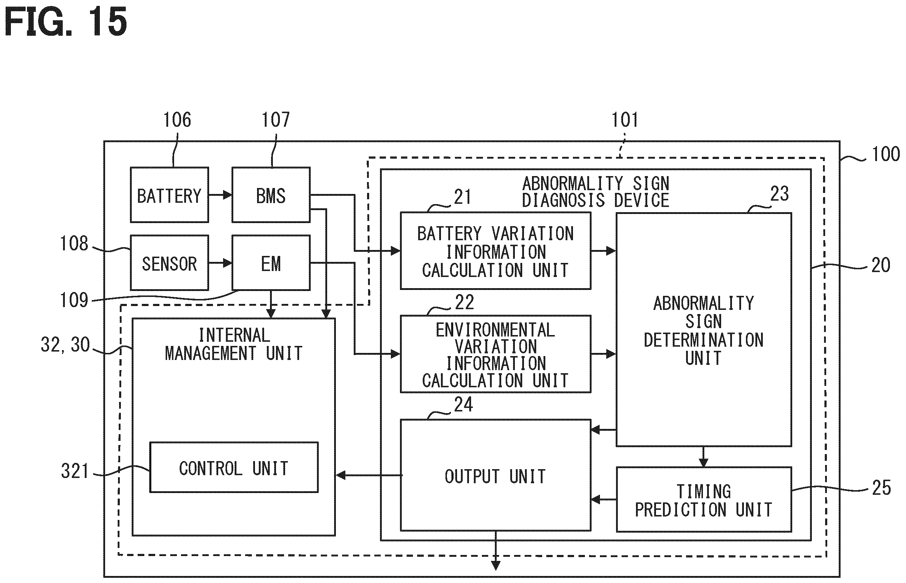

FIG. 15 shows the abnormality sign diagnosis device 20 according to the present embodiment. The diagnosis device 20 further includes a timing prediction unit 25. The timing prediction unit 25 predicts an occurrence timing of the abnormality when the determination unit 23 determines that there is the abnormality sign. The abnormality occurrence timing is a timing when the occurrence of the abnormality is predicted.

The timing prediction unit 25 may predict a timing when the threshold for determining the abnormality is exceeded, that is, the abnormality occurrence timing, based on the temporal variation of the battery variation information by extrapolation. The timing prediction unit 25 may predict the abnormality occurrence timing based on the battery variation information by using a variation prediction model which is based on past result data or test data at the time of prototype production. Other configurations are the same as those described in the preceding embodiment.

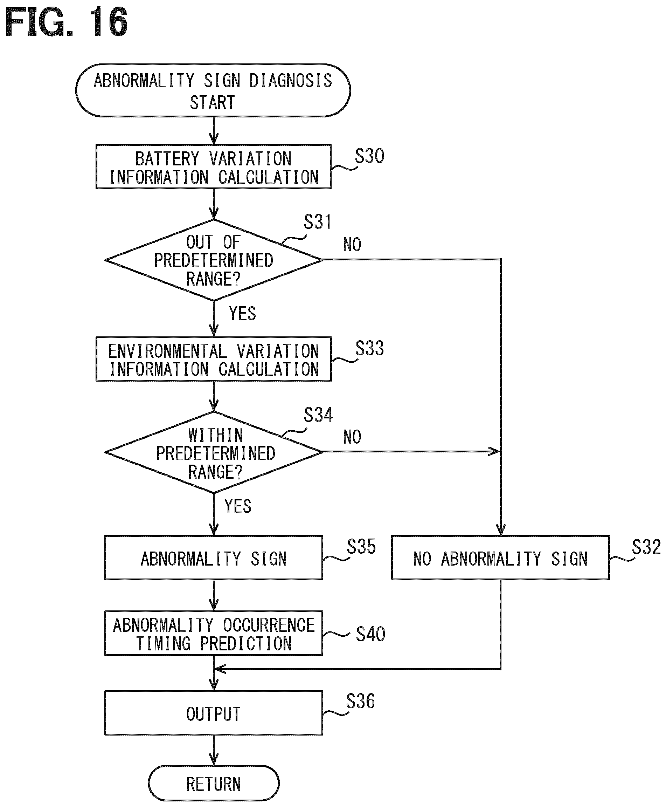

FIG. 16 shows a process to be executed by the diagnosis device 20, that is, the abnormality sign diagnosis method. The processing in steps S30 to S36 is the same as the method described in the preceding embodiment (see FIG. 6). When it is determined in step S35 that there is an abnormality sign, the diagnosis device 20 next predicts an abnormality occurrence timing (step S40). The processing in step S40 corresponds to the timing prediction unit 25. As an example, the diagnosis device 20 predicts the abnormality occurrence timing by extrapolation based on the battery variation information.

Next, the diagnosis device 20 executes the processing in step S36 and outputs information related to the abnormality sign. The diagnosis device 20 outputs the result of the authentication in S35 and the predicted abnormality occurrence timing as the abnormality sign information. The diagnosis device 20 outputs the abnormality sign information to, for example, the display device of the eVTOL 100 and/or the ground station 110. The diagnosis device 20 outputs the abnormality sign information to the navigation management device 30, for example.

### <Summary of Fourth Embodiment>

In the present embodiment, when there is an abnormality sign, the abnormality occurrence timing is predicted based on the battery variation information. Then, the abnormality sign information including the abnormality occurrence timing is output to a display device or the like. Accordingly, the display device displays the abnormality occurrence timing. Accordingly, the presence or absence of the emergency response, the maintenance timing, and the like can be more appropriately set.

### (Fifth Embodiment)

This embodiment is a modification of a basic aspect of the preceding embodiment, and the description of the preceding embodiment can be incorporated. In the preceding embodiment, the display device displays the abnormality occurrence timing. In addition to or instead of the display on the display device, the navigation management device may perform control based on the abnormality occurrence timing.

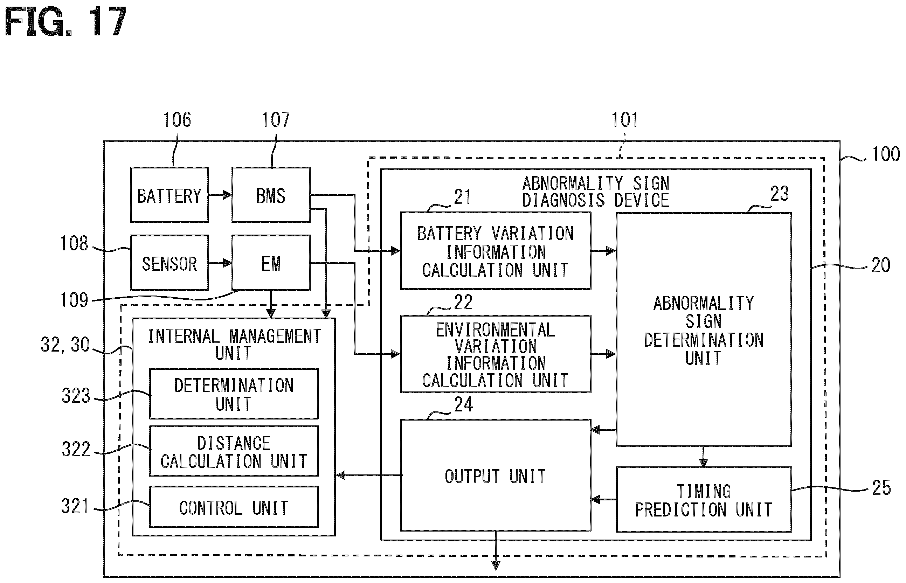

FIG. 17 shows the navigation management device 30 according to the present embodiment, in particular, the internal management unit 32. As an example, the internal management unit 32 includes a distance calculation unit 322 and a determination unit 323 in addition to the control unit 321. Other configurations are the same as those described in the preceding embodiment.

The distance calculation unit 322 calculates the cruising distance of the eVTOL 100. The distance calculation unit 322 acquires information related to a remaining power amount and the power consumption rate of the batteries 106, and estimates the cruising distance by dividing the remaining power amount by the power consumption rate. The remaining power amount may be referred to as a remaining battery level, a battery capacity, or the like. As an example, the distance calculation unit 322 acquires information related to the remaining power amount from a remaining power amount calculation unit (not shown) of the navigation management device 30. Alternatively, the distance calculation unit 322 may acquire the information related to the remaining power amount from the outside of the navigation management device 30, for example, the BMS 107 or an ECU (not shown) which controls the battery 106.

The power consumption rate may be, for example, past data of the same model as the own aircraft. The past data may or may not include data of the own aircraft. Of course, only the past data of the own aircraft may be used. The power consumption rate may be stored in the storage in advance. As an example, the distance calculation unit 322 acquires information related to the power consumption rate from a power consumption rate calculation unit (not shown) of the navigation management device 30.

As an example, the distance calculation unit 322 can acquire information related to the remaining power amount of the batteries 106 (normal batteries) excluding the battery 106 (abnormal battery) determined to have the abnormality sign, and calculate the cruising distance.

The determination unit 323 compares the abnormality occurrence timing output from the diagnosis device 20 with a threshold, and determines whether the abnormality occurrence timing exceeds the threshold. The determination unit 323 compares a cruising distance which is based on normal batteries with a threshold and determines whether the cruising distance exceeds the threshold. The determination unit 323 outputs the determination result to the control unit 321. The control unit 321 performs, based on the determination result of the determination unit 323, predetermined control for enhancing the safety. Details of the determination and control will be described later.

The above configuration is merely an example. Although the example in which the internal management unit 32 includes the control unit 321, the distance calculation unit 322, and the determination unit 323 has been described, the present invention is not limited thereto. At least one of the control unit 321, the distance calculation unit 322, and the determination unit 323 may be disposed outside the internal management unit 32 or may be disposed in a computer other than the ECU 101. For example, the distance calculator 322 may be disposed in the external management unit 31 or the BMS 107.

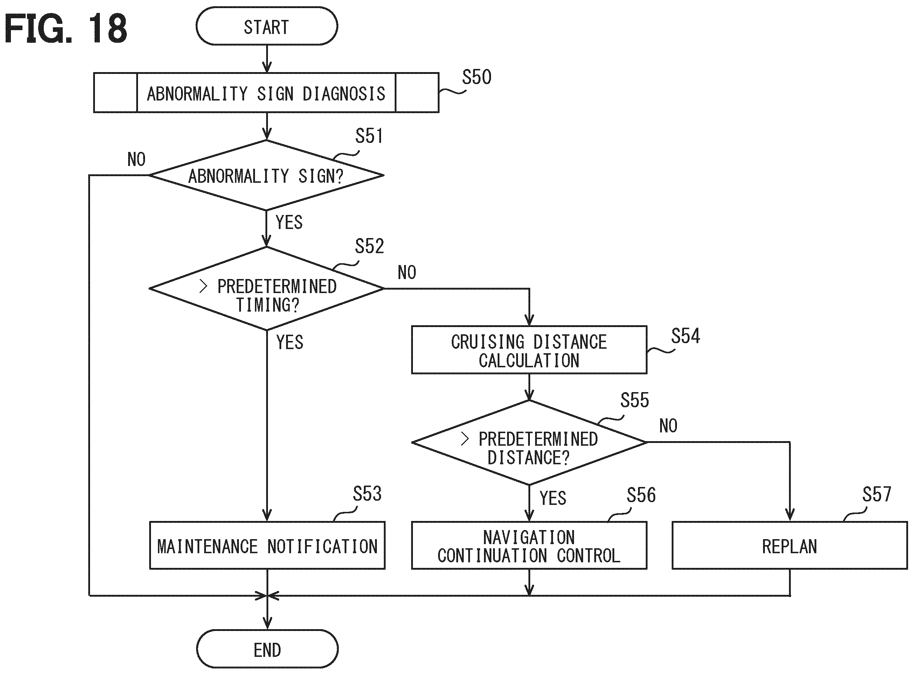

FIG. 18 shows an example of a process to be executed by the navigation management system, that is, the navigation management method. The navigation management system 10 repeatedly performs the process shown in FIG. 18 at a predetermined cycle, for example, after the eVTOL 100 takes off, that is, during the flight.

First, the diagnosis device 20 performs diagnosis processing of the abnormality sign (step S50). The processing in step S50 is the same as the processing shown in FIG. 16. The diagnosis device 20 outputs, as the abnormality sign information, the authentication result of the presence or absence of the abnormality sign and the abnormality occurrence timing when there is an abnormality sign.

Next, the navigation management device 30 determines whether there is an abnormality sign based on the acquired authentication result (step S51). When there is no abnormality sign, the series of processing is ended. When there is an abnormality sign, the navigation management device 30 performs the following control in order to enhance the safety of the navigation.

First, the navigation management device 30 determines whether the acquired abnormality occurrence timing exceeds a first threshold value, specifically, a predetermined timing which is based on a completion timing in the navigation schedule (step 52). The predetermined timing is set by adding a predetermined margin to the completion timing in the navigation schedule, for example. The margin is set within a range in which no problem occurs on an actual flight.

When the completion timing exceeds the predetermined timing, the navigation management device 30 performs control of notifying information including the necessity of maintenance of the abnormal battery among the multiple batteries 106 (step S53), and ends the series of processing. The notification is a call for attention. The notification is displayed on a display device of the aircraft or the ground station 110. The notification to the ground station 110 is particularly effective in a case of the unmanned aircraft.

When the completion timing is the predetermined timing or less, the navigation management device 30 calculates the cruising distance (step S54). The processing in step S54 corresponds to the distance calculation unit 322. The navigation management device 30 calculates the cruising distance based on the remaining power amount and the power consumption rate of each of other batteries 106 excluding the abnormal battery among all the batteries 106. The cruising distance calculated outside the navigation management system 10 may be acquired.

Next, the navigation management device 30 determines whether the cruising distance exceeds a second threshold, specifically, a predetermined distance set in the navigation schedule (step 55). The predetermined distance is set by adding a predetermined margin to a navigation schedule distance, for example. The navigation schedule distance is a remaining distance in the navigation schedule at that time. The processing in steps S52 and S55 corresponds to the determination unit 323.

When the cruising distance which is based on the normal batteries exceeds the predetermined distance, the navigation management device 30 performs navigation continuation control on the normal batteries (step S56), and ends the series of processing. The navigation management device 30 outputs a control signal to the ECU, which controls the battery, so as to turn off the relay corresponding to the abnormal battery. Accordingly, the navigation is continued by supplying power only from the normal batteries 106. The navigation management device 30 may perform the power distribution control and/or the power saving control in addition to the navigation continuation control. Since the cruising distance is extended, the safety of the navigation can be further enhanced.

In a case where the cruising distance is equal to or less than the predetermined distance, the navigation management device 30 determines that there is a possibility that a destination cannot be reached with the remaining power amount of the normal batteries, performs control of re-planning the navigation schedule (step S57), and ends the series of processing. For example, the navigation management device 30 makes a plan in which a point which can be reached at the remaining cruising distance is a new destination. At this time, a point where charging and/or maintenance is possible may be set as the destination. The navigation management device 30 makes an emergency landing plan, for example. The processing in steps S53, S56, and S57 corresponds to the control unit 321.

### <Summary of Fifth Embodiment>

In the present embodiment, the navigation management device 30 performs, based on the abnormality occurrence timing, predetermined control for ensuring the safety of the navigation. As compared with a configuration in which the predetermined control is performed based only on the authentication result, that is, the presence or absence of the abnormality sign, more appropriate processing can be performed. That is, the safety of the navigation can be further enhanced.

As an example, when the abnormality occurrence timing exceeds the predetermined timing which is based on the completion timing in the navigation schedule, the navigation management device 30 notifies information including that maintenance of the abnormal battery is required. When no problem occurs on a current flight, planned maintenance can be performed by notifying that the maintenance is required at an early stage.

As an example, the navigation management device 30 performs predetermined control based on the abnormality occurrence timing and the cruising distance in a case where the navigation is continued by other batteries 106 (normal batteries) excluding the battery 106 (abnormal battery) determined to have the abnormality sign among the multiple batteries 106. More appropriate processing can be performed by considering information related to the cruising distance which is based on the normal batteries. Accordingly, the safety of the navigation can be further enhanced. For example, a probability of returning to the ground can be increased.

As an example, when the abnormality occurrence timing falls below the predetermined timing which is based on the completion timing in the navigation schedule and the cruising distance which is based on the normal batteries exceeds the predetermined distance in the navigation schedule, the navigation management device 30 performs control of continuing the navigation with the normal batteries. As described above, when the cruising distance of the normal batteries exceeds the predetermined distance, the navigation is continued in a state where the power supply from the abnormal battery is stopped, that is, the abnormal battery is isolated. Accordingly, the navigation can be completed safely.

As an example, when the abnormality occurrence timing falls below the predetermined timing which is based on the completion timing in the navigation schedule and the cruising distance which is based on the normal batteries falls below the predetermined distance in the navigation schedule, the navigation management device 30 re-plans the navigation schedule. Accordingly, it is possible to quickly advance the re-planning such as changing the destination in consideration of the cruising distance or emergency landing. For example, the emergency response can be speeded up.

### <Modification>

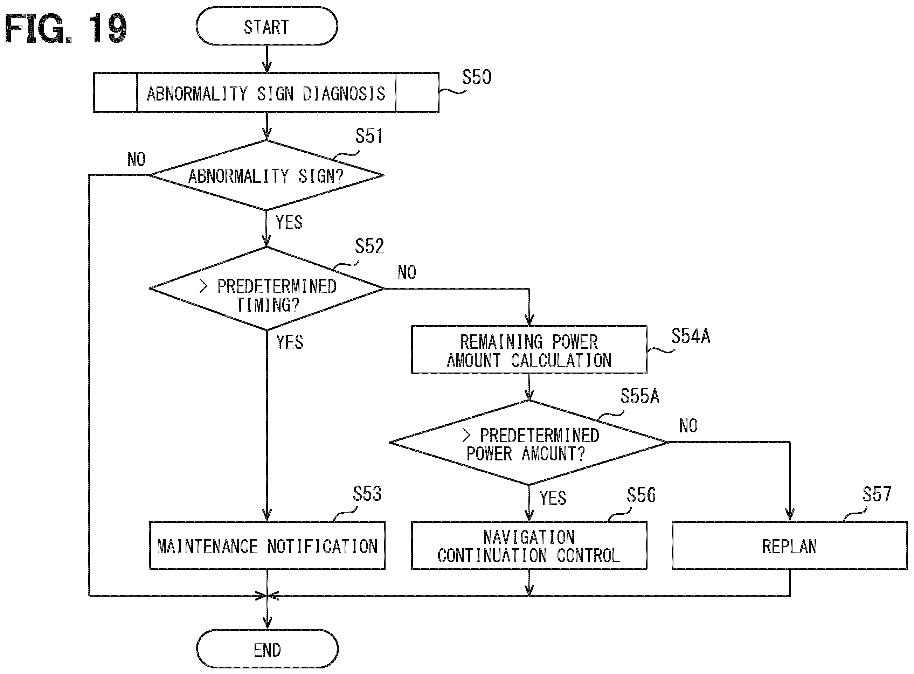

Instead of the distance calculation unit 322, the remaining power amount calculation unit which calculates the remaining power amount of the normal batteries 106 may be provided. In this case, the navigation management system 10 executes a process shown in FIG. 19, for example. The navigation management device 30 calculates the remaining power amount of the normal batteries (step S54A) instead of the processing in step S54 shown in FIG. 18. Instead of the processing in step S55, the navigation management device 30 compares the remaining power amount of the normal batteries with a predetermined power amount in the navigation schedule, and determines whether the remaining power amount exceeds the predetermined power amount (step S55A). The predetermined power amount is a power amount corresponding to the remaining distance among the power amount required for the navigation schedule. Other processing is the same as that in FIG. 18.

An example in which the navigation management device 30 calculates the cruising distance which is based on the normal batteries has been described, but the present invention is not limited thereto. The navigation management device 30 may acquire the cruising distance calculated by the outside of the navigation management device 30, for example, the ECU that controls the batteries. The navigation management device 30 may include a distance acquisition unit instead of the distance calculation unit 322. Similarly, an example in which the navigation management device 30 calculates the remaining power amount of the normal batteries has been described, but the navigation management device 30 may acquire the remaining power amount calculated by the outside.

An example in which it is notified that the maintenance of the abnormal battery is required when the abnormality occurrence timing exceeds the predetermined timing has been described, but the present invention is not limited thereto. A notification level may be set in multiple stages by combining the cruising distance and the remaining power amount. For example, a notification having a higher urgency than the maintenance notification may be performed when the cruising distance exceeds the predetermined distance, and a notification having a highest urgency may be performed when the cruising distance is equal to or less than the predetermined distance.

### (Sixth Embodiment)

This embodiment is a modification of a basic aspect of the preceding embodiment, and the description of the preceding embodiment can be incorporated. The present embodiment provides a distance calculation device and a distance calculation method suitable for the distance calculation unit described in the preceding embodiment.

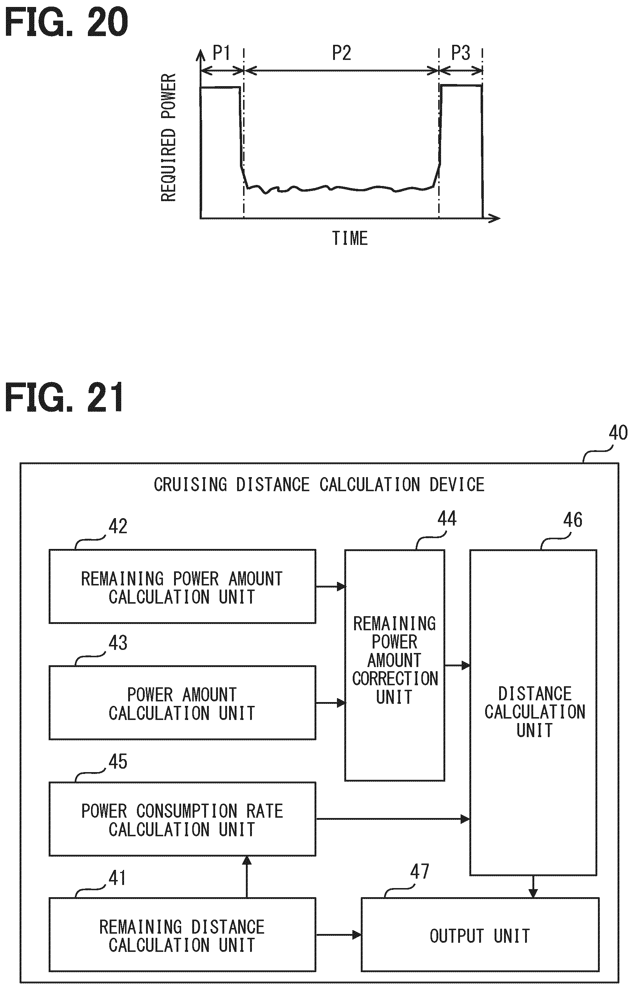

First, a power profile of the eVTOL 100 will be described with reference to FIG. 20.

### <Power Profile>

FIG. 20 shows a power profile from take-off to landing of the eVTOL 100. A period P1 is referred to as a take-off period, a take-off time, a departure period, a departure time, or the like. A period P2 is referred to as a cruising period, a cruising time, or the like. A period P3 is referred to as a landing period, a landing time, an arrival period, an arrival time, or the like. For convenience, in FIG. 20, required power, that is, an output is constant in substantially an entire region of each of the periods P1 and P3.

The eVTOL 100 ascends from a take-off point to a cruising start point in the period P1. The eVTOL 100 cruises at a predetermined altitude in the period P2. The eVTOL 100 descends from an end point of the period P2 to a landing point in the period P3. A movement of the eVTOL 100 mainly includes a horizontal direction component in the period P2 and mainly includes a vertical direction component in each of the periods P1 and P3. In the periods P1 and P3 in which the eVTOL 100 moves in the vertical direction, a motor of the eVTOL 100 is required to provide a high output continuously for a predetermined time. Therefore, a power consumption amount during take-off and a power consumption amount during landing are large. A proportion of the power amount in the period P1 and the power amount in the period P3 to a total power amount of the batteries 106 provided to the eVTOL 100 is high.

Therefore, the cruising distance calculation device to be described later calculates the cruising distance in consideration of the power consumption amount during the departure and/or the arrival. For example, when there is a stop at a relay point between a departure point and a destination point, a landing period to the relay point is also included in the period P3. A take-off period from the relay point is also included in the period P1. When a flight in which charging is performed one time includes multiple times of take-off and landing, the cruising distance calculation device calculates the cruising distance in consideration of a power amount consumed in the multiple times of take-off and landing.

A power profile of the electric moving object other than the eVTOL 100 which moves in the horizontal direction and the vertical direction is similar to that of the eVTOL 100. For example, in the case of the electric submarine, the electric submarine descends from the departure point to the cruising start point in the period P1, and cruises in the period P2. Then, in the period P3, the electric submarine ascends from an end point of the cruising period to the arrival point. Therefore, the power consumption amount during the departure and arrival when moving in the vertical direction is large.

### <Cruising Calculation Distance Device>

FIG. 21 shows functional blocks of the cruising distance calculation device. A cruising distance calculation device 40 includes a remaining distance calculation unit 41, a remaining power amount calculation unit 42, a power amount calculation unit 43, a remaining power amount correction unit 44, a power consumption rate calculation unit 45, a distance calculation unit 46, and an output unit 47. Hereinafter, the cruising distance calculation device 40 may be simply referred to as the distance calculation device 40.

The remaining distance calculation unit 41 calculates a remaining distance. The remaining distance is, for example, a scheduled cruising distance before take-off, and is a cruising distance remained during cruising, that is, a remaining cruising distance. Before the take-off, the remaining distance calculation unit 41 acquires the navigation schedule from the navigation management device 30 and calculates the scheduled cruising distance. During the cruising, the remaining distance calculation unit 41 acquires data such as a cruising position and route information of the eVTOL 100 from the navigation management device 30, and calculates the remaining cruising distance.

The remaining power amount calculation unit 42 calculates the remaining power amount of the batteries 106. The remaining power amount calculation unit 42 acquires data related to the batteries 106 and calculates the remaining power amount. As an example, the remaining power amount calculation unit 42 acquires data related to the batteries 106 from the BMS 107. The remaining power amount calculation unit 42 may acquire data from a sensor (not shown) which detects a state of the batteries 106. The remaining power amount calculation unit 42 may acquire data from a battery ECU (not shown) which controls the batteries 106, or may acquire data from the internal management unit 32.

The remaining power amount calculation unit 42 can calculate the remaining power amount for each of the multiple batteries 106. The remaining power amount calculation unit 42 can calculate the remaining power amount for a part of batteries 106 among the multiple batteries 106. As an example, the remaining power amount calculation unit 42 calculates the remaining power amounts of the normal batteries, which are other batteries 106 excluding the abnormal battery.

The power amount calculation unit 43 calculates a departure and arrival power amount which is a power amount required during the departure and/or the arrival of the eVTOL 100. The power amount calculation unit 43 estimates, by calculation, the departure and arrival power amount required for a current flight (navigation). The departure and arrival power amount is a take-off power amount required in the period P1 and/or a landing power amount required in the period P3. When a flight in which charging is performed one time includes multiple times of take-off and landing, the power amount calculation unit 43 calculates a power amount required for the multiple times of take-off and landing as the departure and arrival power amount. As an example, the power amount calculation unit 43 calculates the departure and arrival power amount based on history information, that is, data related to a past departure and arrival power amount.

The remaining power amount correction unit 44 acquires the remaining power amount and the departure and arrival power amount and calculates a corrected remaining power amount. As an example, the remaining power amount correction unit 44 acquires the remaining power amount from the remaining power amount calculation unit 42 and acquires the departure and arrival power amount from the power amount calculation unit 43. The corrected remaining power amount may be referred to as a corrected remaining amount. The corrected remaining power amount is a remaining power amount corrected by using the departure and arrival power amount. The remaining power amount correction unit 44 estimates the corrected remaining power amount, that is, a power amount that can be used during the cruising, by subtracting the departure and arrival power amount from the remaining power amount.

The power consumption rate calculation unit 45 calculates the power consumption rate during the cruising of the eVTOL 100. The power consumption rate calculation unit 45 calculates the power consumption rate during the cruising, for example, based on a power consumption amount and a cruising distance during past cruising. The power consumption rate calculation unit 45 may calculate the power consumption rate of the cruising, for example, based on a remaining distance of the current flight and a power consumption amount in a past flight having the same route as the current flight, which corresponds to the remaining distance of the current flight. As described above, the remaining distance is, for example, the scheduled cruising distance before the take-off and the remaining cruising distance during the cruising. The power consumption rate calculation unit 45 acquires data related to the past power consumption amount from the navigation management device 30, for example.

The distance calculation unit 46 acquires the corrected remaining power amount and calculates the cruising distance based on the corrected remaining power amount. The distance calculation unit 46 estimates the cruising distance by dividing the corrected remaining power amount by the power consumption rate during the cruising. The distance calculation unit 46 acquires, for example, the corrected remaining power amount from the remaining power amount correction unit 44, and acquires the power consumption rate during the cruising from the power consumption rate calculation unit 45. As an example, the distance calculation unit 46 calculates the cruising distance, which is based on the normal batteries, by dividing the corrected remaining power amount of the normal batteries with the power consumption rate during the cruising.

The output unit 47 acquires a calculation result from the distance calculation unit 46 and outputs information related to the calculation result to the outside of the distance calculation device 40. As an example, the output unit 47 outputs the cruising distance. The output unit 47 may output, together with the cruising distance, at least one of the remaining cruising distance, a difference between the cruising distance and the remaining cruising distance, and a surplus degree of the cruising distance with respect to the remaining cruising distance. The output unit 47 may output the information related to the calculation result to a display device, or may output the information to the navigation management device 30 (for example, the determination unit 323).

The above configuration is merely an example. The distance calculation device 40 may include at least the distance calculation unit 46 and the output unit 47. The distance calculation device 40 may include at least the remaining power amount correction unit 44 and the distance calculation unit 46. The distance calculation device 40 may acquire the remaining distance (the scheduled cruising distance, the remaining cruising distance) calculated by the navigation management device 30, for example. The distance calculation device 40 may acquire the remaining power amount calculated by the BMS 107, for example.

The distance calculation device 40 may acquire the departure and arrival power amount (take-off and landing power amount) calculated by the navigation management device 30, for example. The distance calculation device 40 may acquire the corrected remaining power amount calculated by the navigation management device 30, for example. The distance calculation device 40 may acquire the power consumption rate during the cruising calculated by the navigation management device 30, for example.

### <Cruising Distance Calculation Method>

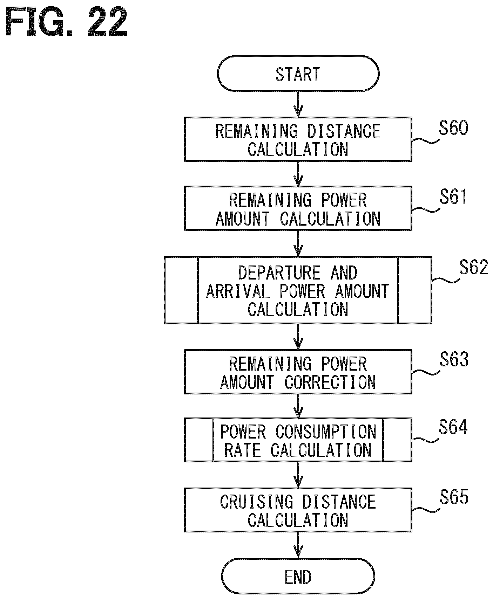

FIG. 22 shows a method for calculating the cruising distance. The cruising distance calculation method is obtained by excluding the output processing from the processing executed by the cruising distance calculation device 40. The navigation management method described in the preceding embodiment can be applied to cruising distance calculation processing (step S54 of FIG. 18).

As shown in FIG. 22, the distance calculation device 40 first calculates the remaining distance (step S60). The processing in step S60 corresponds to the remaining distance calculation unit 41. As an example, during the cruising, the distance calculation device 40 acquires data such as the cruising position and the route information of the eVTOL 100 from the navigation management device 30, and calculates the remaining cruising distance. The distance calculation device 40 can also acquire the navigation schedule from the navigation management device 30 and calculate the scheduled cruising distance before the take-off including flight planning.

Next, the distance calculation device 40 calculates the remaining power amount of the batteries 106, that is, the remaining battery level (step S61). The processing in step S51 corresponds to the remaining power amount calculation unit 42. The distance calculation device 40 acquires data related to the batteries 106 from the BMS 107, for example, and calculates the remaining power amount based on the acquired data. As an example, the distance calculation device 40 calculates the remaining power amount of the normal batteries among the multiple batteries 106 based on the determination result of the presence or absence of the abnormality sign and the identification information. The distance calculation device 40 can also calculate the remaining power amounts of all the batteries 106.

The distance calculation device 40 calculates the remaining power amount by a known method. The distance calculation device 40 may calculate the remaining power amount based on, for example, a state of charge (SOC) and a full charge capacity. The distance calculation device 40 may calculate the remaining power amount based on, for example, an internal resistance value, an open circuit voltage (OCV), and a battery temperature of each of the multiple battery cells constituting the battery 106. The SOC is an abbreviation of the state of charge. The OCV is an abbreviation of the open circuit voltage.

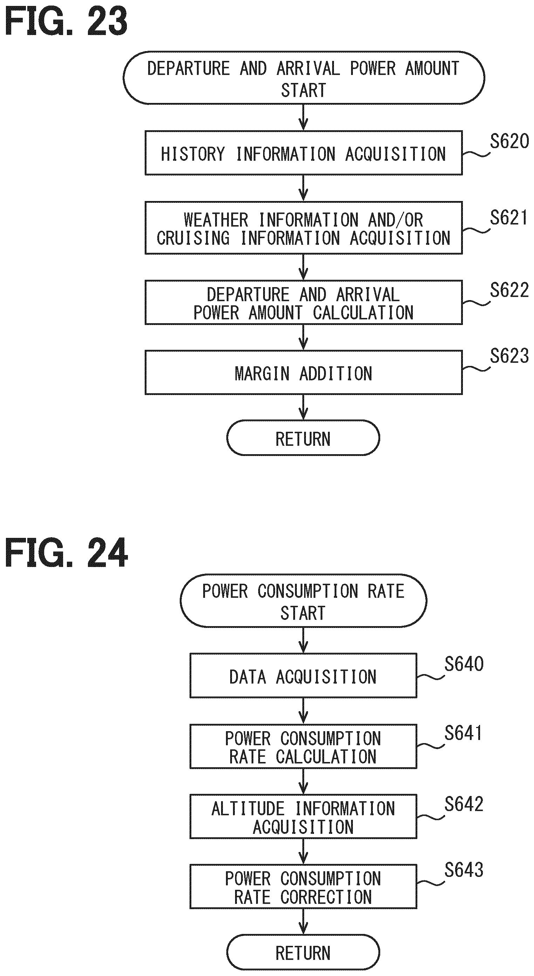

Next, the distance calculation device 40 calculates the departure and arrival power amount (step S62). The processing in step S62 corresponds to the power amount calculation unit 43. FIG. 23 shows a method for calculating the departure and arrival power amount.

First, the distance calculation device 40 acquires history information, that is, data related to the past departure and arrival power amount (step S620). The distance calculation device 40 acquires the history information from the navigation management device 30, for example. The history information may be an absolute value of the power consumption amount during the departure and/or the arrival, or may be a power profile. The navigation management device 30 collects the history information from each aircraft and/or each ground station 110 and stores the history information into a storage.

As the history information, for example, history information of a target departure point and/or arrival point of the current flight is preferable. As the history information, history information of the same model as the own aircraft is preferable. It is more preferable to use the history information of the target departure point and/or arrival point of the current flight in the same model as the own aircraft. The history information of the same model may or may not include data of the own aircraft. Of course, as the history information, only the history information of the own aircraft may be used.

Next, the distance calculation device 40 acquires weather information and/or cruising information (step S621). The distance calculation device 40 acquires information on an element which affects the take-off and landing. The distance calculation device 40 acquires the information from, for example, the external management unit 31 (ground station 110) of the navigation management device 30. The weather information is weather information at the take-off point and/or the landing point. The weather information may include an atmospheric pressure, a wind speed, an amount of rain and snow, and the like at each altitude. The cruising information may include a cruising altitude, a loaded weight, or the like of the eVTOL 100.

The distance calculation device 40 calculates the departure and arrival power amount based on the acquired information (step S622). The distance calculation device 40 estimates the departure and arrival power amount using a map or a regression model created based on the acquired history information. However, when a variation in the absolute value of the power consumption amount is within a predetermined range, that is, when the variation is small, the distance calculation device 40 may set a maximum value of the variation or the like as the departure and arrival power amount. When the power profile is within a predetermined range, that is, when a change in the required power is small, the distance calculation device 40 may set the departure and arrival power amount by multiplying a maximum power value in the profile and an output time, for example.

In the present embodiment, the departure and arrival power amount is calculated in consideration of the weather information and/or the cruising information. When a weather condition is severe, for example, a difficulty level of the take-off and landing is high, and a time required for the take-off and landing increases. The higher the cruising altitude is, the longer a movement distance in the vertical direction is. The difficulty level increases. Therefore, the higher the cruising altitude is, the longer the time required for the take-off and landing is. The larger the loaded weight is, a higher output is required. The difficulty level increases. Therefore, the larger the loaded weight is, the longer the time required for the take-off and landing is.

The distance calculation device 40 of the present embodiment creates a map or a multiple regression model by adding the weather information and the cruising information to the history information, and estimates the departure and arrival power amount. That is, the departure and arrival power amount is corrected in consideration of the weather information and/or the cruising information. Alternatively, after the departure and arrival power amount is calculated based on the history information, the calculated departure and arrival power amount may be corrected based on the weather information and/or the cruising information.

The departure and arrival power amount is a power amount required for the take-off and landing. In a case where one time of take-off and landing with charging of one time is planned, the departure and arrival power amount calculated during the cruising is a power amount required for one time of landing. In a case where one time of take-off and landing with charging of one time is planned, the departure and arrival power amount calculated before the take-off is a sum of a power amount required for one time of take-off and a power amount required for one time of landing. In a case where take-off and landing at multiple points with charging of one time is planned, the departure and arrival power amount is a sum of power amounts of multiple times of take-off and power amounts of multiple times of landing.

Next, the distance calculation device 40 adds a margin to the calculated departure and arrival power amount (step S623), and ends the series of processing. The margin indicates, for example, a predetermined surplus degree. The margin is, for example, a power amount required to retry landing a predetermined number of times or more, that is, a reserve power amount.

The margin may be set according to a skill level of the pilot. For example, the margin is decreased as the skill level increases, and the margin is increased as the skill level decreases. The skill level can be set based on information of the pilot received from the terminal when the navigation schedule is planned, for example, information such as navigation experience and the number of times of navigation.

When calculating the departure and arrival power amount, the distance calculation device 40 calculates the corrected remaining power amount as shown in FIG. 22 (step S63). The processing in step S63 corresponds to the remaining power amount correction unit 44. The distance calculation device 40 calculates the corrected remaining power amount based on the remaining power amount calculated in step S61 and the departure and arrival power amount calculated in step S62. The distance calculation device 40 estimates the corrected remaining power amount, that is, a power amount that can be used during the cruising, by subtracting the departure and arrival power amount from the remaining power amount. As an example, the distance calculation device 40 calculates the corrected remaining power amount of the normal batteries. The distance calculation device 40 can also calculate the corrected remaining power amount of all the batteries 106.

Next, the distance calculation device 40 calculates the power consumption rate during the cruising (step S64). The processing in step S64 corresponds to the power consumption rate calculation unit 45. FIG. 24 shows a method for calculating the power consumption rate.

First, the distance calculation device 40 acquires data necessary for calculating the power consumption rate during the cruising (period P2) (step S640). The distance calculation device 40 acquires, for example, the power consumption amount during the past cruising from the navigation management device 30.

As the past power consumption amount, it is preferable to use past data in which the navigation conditions substantially match or are close to those of the current flight. Of course, the past data may be data of the own aircraft. The past data is not limited to the data of the own aircraft, and may be past data in which a navigation route is the same as that of the current flight. The past data may be past data of the same model as the own aircraft. For example, past data of the same model with the same navigation route under close weather conditions is preferable. The past data of the same model may or may not include data of the own aircraft. When the power consumption rate is calculated in the middle of the cruising period, the power consumption amount up to the middle of the cruising period may be used as the past data.

The distance calculation device 40 may estimate the power consumption amount during the cruising by a method similar to the calculation of the departure and arrival power amount. That is, the distance calculation device 40 may acquire the absolute value of the power consumption amount or the power profile during the past cruising and estimate the power consumption amount using a map or a regression model created based on the acquired information.

Next, the distance calculation device 40 calculates the power consumption rate during the cruising (step S641). The distance calculation device 40 estimates a cruising power consumption rate of the current flight, for example, by dividing the cruising distance during the past cruising by the power consumption amount. Alternatively, for example, the distance calculation device 40 may estimate the cruising power consumption rate of the current flight, for example, by dividing the remaining distance of the current flight by the power consumption amount in a past flight having the same route as the current flight, which corresponds to the remaining distance of the current flight. The distance calculation device 40 uses the remaining cruising distance as the remaining distance. In a case before the take-off, the distance calculation device 40 can use the scheduled cruising distance as the remaining distance.

Next, the distance calculation device 40 acquires altitude information (step S642). The altitude information is, for example, information related to the cruising altitude and/or a variation in the cruising altitude. The altitude information may be, for example, an absolute value of the cruising altitude or a profile of the cruising altitude. The distance calculation device 40 may acquire the altitude information which is based on the navigation schedule from the navigation management device 30, for example. In the middle of the cruising period, the distance calculation device 40 may acquire, from the navigation management device 30, the altitude information in the cruising period up to now.

Next, the distance calculation device 40 corrects the power consumption rate based on the acquired altitude information (step S643), and ends the series of processing. A density of air that affects the power consumption rate, that is, an air resistance, changes depending on the cruising altitude. The higher the cruising altitude is, the smaller the air resistance is, and the power consumption rate is improved. The variation in the cruising altitude is accompanied by a variation in the output. Therefore, in the present embodiment, the power consumption rate is corrected based on the altitude information.

After calculating the power consumption rate, the distance calculation device 40 calculates the cruising distance as shown in FIG. 22 (step S65). The processing in step S65 corresponds to the distance calculation unit 46. The distance calculation device 40 estimates the cruising distance by dividing the corrected remaining power amount calculated in step S63 by the power consumption rate calculated in step S64.

The above-described cruising distance calculation method is merely an example. The cruising distance calculation method may include at least the calculation of the corrected remaining power amount in step S63 and the calculation of the cruising distance in step S65. For example, the navigation management device 30 may be configured to calculate the corrected remaining power amount, and the corrected remaining power amount may be acquired in step S63.

The navigation management device 30 may be configured to calculate the remaining distance, and the remaining distance may be acquired in step S60. The BMS 107 or the like may be configured to calculate the remaining power amount of the batteries 106, and the remaining power amount may be acquired in step S61. The navigation management device 30 may be configured to calculate the departure and arrival power amount, and the departure and arrival power amount may be acquired in step S62. The navigation management device 30 may be configured to calculate the power consumption rate, and the power consumption rate may be acquired in step S64.

### <Summary of Sixth Embodiment>

As shown in FIG. 20, the electric moving object such as the eVTOL 100 which moves in the horizontal direction and the vertical direction is required to provide a high output continuously for a predetermined time during the departure or arrival in which a movement having a vertical direction component is performed. That is, a proportion of the departure and arrival power amount to the total power amount of the batteries 106 is high. Since the output is high or the power amount is high, an error is likely to occur in the departure and arrival power amount.

According to the distance calculation device 40 (cruising distance calculation device 40) of the present embodiment, the corrected remaining power amount is used to calculate the cruising distance. The corrected remaining power amount is obtained by correcting the remaining power amount of the batteries 106 with the departure and arrival power amount required during the departure and/or the arrival of the electric moving object. As a result, accuracy of estimating the cruising distance can be improved for the electric moving object (eVTOL 100) which moves in the horizontal direction and the vertical direction. As described above, the distance calculation device 40 according to the present embodiment is suitable for the distance calculation unit 322 described in the preceding embodiment. Application to the distance calculation unit 322 can increase the accuracy of estimating the cruising distance which is based on the normal batteries. Accordingly, the safety of the navigation can be further enhanced.

The departure and arrival power amount may be a value set in advance (predetermined value). However, the power profile during the departure and/or the arrival may vary depending on characteristics of the departure point and the arrival point, the skill level of the operator, and the like. As an example, the distance calculation device 40 has a function of calculating the departure and arrival power amount. The distance calculation device 40 calculates the departure and arrival power amount based on the history information, that is, data related to the past departure and arrival power amount. Taking an influence of the variation elements into consideration by using the history information, accuracy of the departure and arrival power amount and hence accuracy of the cruising distance can be improved. For example, the accuracy of the cruising distance can be improved even for a navigation route used for a first time. By enhancing the accuracy of estimating the cruising distance, the safety of the navigation can be further enhanced.

The characteristics of the departure point and the arrival point are, for example, a wind direction, a wind speed, an atmospheric pressure, weather, and the like. These characteristics affect the difficulty level in the departure (take-off) and the arrival (landing). As an example, the distance calculation device 40 calculates the departure and arrival power amount using the history information including information related to the past departure and arrival power amount at the target departure point and/or arrival point. That is, the departure and arrival power amount is calculated in consideration of the difficulty level of the point. The history information may also include data of other aircrafts. As a result, the accuracy of the cruising distance and hence the safety of the navigation can be further enhanced.

Ease of operation, output characteristics, and the like vary depending on the model (type) of the electric moving object. As an example, the distance calculation device 40 calculates the departure and arrival power amount using the history information including information related to the past departure and arrival power amount in the same model as the electric moving object. Accordingly, the accuracy of the departure and arrival power amount can be improved, and hence the accuracy of the cruising distance can be further improved. It is more preferable to use the history information of the target departure point and/or arrival point of the current flight in the same model as the own aircraft.

Depending on the weather condition, the difficulty level of the departure or the arrival differs. The difficulty level of the departure or the arrival differs depending on cruising conditions such as the cruising altitude and the loaded weight. As an example, the distance calculation device 40 corrects the departure and arrival power amount based on the weather information of the target departure point and/or arrival point and/or the cruising information. Accordingly, the accuracy of the departure and arrival power amount can be improved, and hence the accuracy of the cruising distance can be further improved.

The density of air that affects the power consumption rate, that is, the air resistance, changes depending on the cruising altitude. The higher the cruising altitude is, the smaller the air resistance is. The variation in the cruising altitude is accompanied by the variation in the output. As an example, the distance calculation device 40 has a function of calculating the power consumption rate during the cruising, and corrects the power consumption rate based on the altitude or the altitude variation during the cruising. Accordingly, accuracy of the power consumption rate can be improved, and hence the accuracy of the cruising distance can be further improved.

### <Modification>

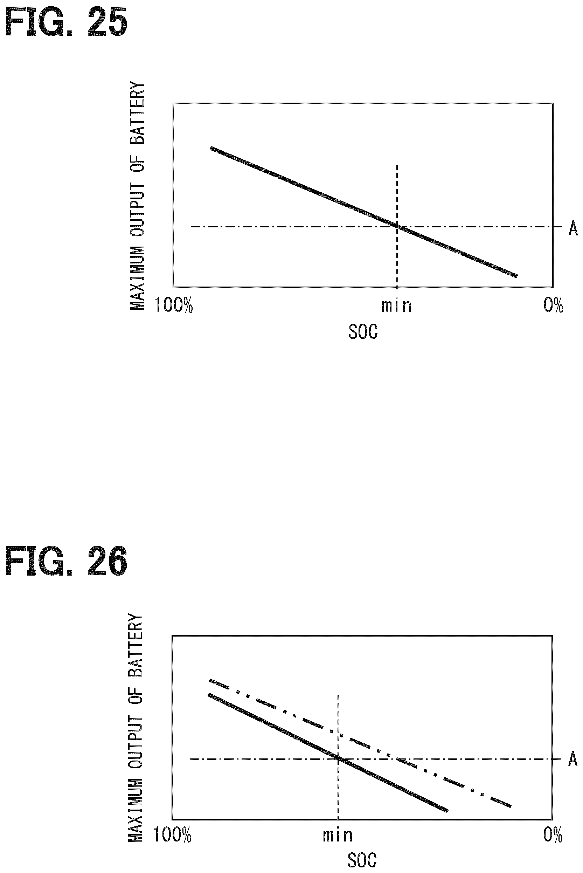

FIG. 25 shows SOC dependence of a maximum output of the battery which can be output continuously for a predetermined time. min shown in FIG. 25 is a minimum SOC at which an output A required for the take-off and landing can be output continuously for a predetermined time, that is, a power amount required for the take-off and landing can be secured. For example, when min is 30%, the take-off and landing is possible at an SOC of 30% or more. The take-off and landing is not possible at an SOC of less than 30%.

Thus, an output performance of the battery 106 is affected by the SOC. Thus, instead of the history information, the departure and arrival power amount may be calculated based on the SOC dependence of the maximum output of the battery 106. The distance calculation device 40 (power amount calculation unit 43) may include, for example, a map indicating the SOC dependence of the maximum output of the battery 106, the output A, and the predetermined time in advance, and calculate the minimum SOC, and hence the departure and arrival power amount. Accordingly, the departure and arrival power amount can be calculated by a simpler method than using the history information. The map, the output A, and the time are set based on, for example, data acquired during a test.

Indication of the SOC dependence of the maximum output of the battery 106 is not limited to the map. The departure and arrival power amount may be estimated using a battery model. The power profile (map) is not limited to the example described above. Although an example in which the predetermined time and the power are constant has been described, the present invention is not limited thereto. The calculation may be performed based on a power profile which varies with time. In this case, the departure and arrival power amount may be obtained by integration, that is, interval integration.

As shown in FIG. 26, the output performance of the battery 106 is affected by the battery temperature and the battery deterioration. A solid line shown in FIG. 26 indicates a state in which the battery temperature decreases or the battery deteriorates as compared with a two-dot chain line. When the battery temperature decreases, the internal resistance of the battery 106 increases and the output decreases. Similarly, when the battery 106 deteriorates, the internal resistance increases and the output decreases. In this way, the minimum SOC required to continuously output the output A for the predetermined time varies in response to the battery temperature and the battery degradation. For example, due to the temperature decrease, the minimum SOC is increased as compared with that before the temperature decrease. Accordingly, the departure and arrival power amount may be corrected based on the battery temperature or the battery degradation. Accordingly, accuracy of estimating the departure and arrival power amount can be improved.

### (Other Embodiments)

The disclosure in the descriptions, the drawings, and the like is not limited to the illustrated embodiments. The disclosure encompasses the illustrated embodiments and modifications thereof made by those skilled in the art. For example, the disclosure is not limited to combinations of components and/or elements described in the embodiments. The disclosure may be implemented in various combinations. The disclosure may include additional portions that can be added to the embodiments. The disclosure encompasses omission of the components and/or the elements of the embodiments. The disclosure encompasses the replacement or combination of the components and/or the elements between one embodiment and another. The disclosed technical scope is not limited to those described in the embodiments. The several technical scopes disclosed are indicated by the description of the claims, and should be construed to include all modifications within the meaning and range equivalent to the description of the claims.

The disclosure in the descriptions, the drawings, and the like is not limited by the description of the claims. The disclosure in the descriptions, the drawings, and the like encompasses the technical ideas described in the claims, and extends to technical ideas that are more diverse and extensive than the technical ideas described in the claims. Accordingly, various technical ideas can be extracted from the disclosure of the descriptions, the drawings, and the like without being restricted by the description of the claims.

When it is mentioned that a certain element or layer is "on", "coupled", "connected", or "bonded", the certain element or layer may be directly on, coupled, connected, or bonded to another element or layer, or an interposed element or an interposed layer may be present. In contrast, when it is mentioned that a certain element is "directly on", "directly coupled", "directly connected", or "directly bonded" to another element or layer, no interposed element or interposed layer is present. Other words used to describe a relationship between elements should be interpreted in the similar manner (for example, "between" and "directly between", "adjacent to" and "directly adjacent to"). When used in the description, the term "and/or" includes any of and all combinations related to one or multiple associated listed items.

Each of the various flowcharts shown in the present disclosure is an example, and the number of steps constituting the flowchart and the execution order of the process can be appropriately changed. The device, the system, and the method described in the present disclosure may be implemented by a dedicated computer constituting a processor that is programmed to execute one or multiple functions implemented by a computer program. The device and the method described in the present disclosure may be implemented using a dedicated hardware logic circuit. Further, the device and the method described in the present disclosure may be implemented by one or multiple dedicated computers implemented by a combination of a processor that executes a computer program and one or more hardware logic circuits.

For example, a part or all of the functions of the processor 102 may be implemented as hardware. An aspect in which a certain function is implemented as hardware includes an aspect in which one or multiple ICs are used. As the processor (arithmetic core), a CPU, an MPU, a GPU, a DFP, or the like can be adopted. The CPU is an abbreviation of a central processing unit. The MPU is an abbreviation of a micro-processing unit. The GPU is an abbreviation of a graphics processing unit. The DFP is an abbreviation of a data flow processor.

A part or all of the functions of the processor 102 may be implemented by combining multiple types of calculation processing devices. A part or all of the functions of the processor 102 may be implemented using an SoC, an ASIC, an FPGA, or the like. The SoC is an abbreviation of a system-on chip. The ASIC is an abbreviation of an application specific integrated circuit. The FPGA is an abbreviation of a field programmable gate array. The same applies to the processor 112.

The computer program may be stored in a computer-readable non-transitionary tangible recording medium (non-transitory tangible storage medium) as an instruction to be executed by the computer. As the program storage medium, an HDD, an SSD, a flash memory, or the like can be adopted. The HDD is an abbreviation of a hard disk drive. The SSD is an abbreviation of a solid state drive. A program for causing a computer to function as the abnormality sign diagnosis device 20 or the navigation management device 30, and a non-transitory tangible recording medium such as a semiconductor memory in which the program is recorded are also included in the scope of the present disclosure.

When the target battery variation information is the temperature variation information (ΔT/Δt or ΔT/ΔI) and a thermal capacity of the battery 106 is large, a battery variation may be delayed with respect to the environmental variation. Accordingly, for example, the presence or absence of the abnormality sign may be determined using the battery variation information which is based on the battery parameter acquired this time and the environmental variation information which is based on the environmental parameter acquired at a timing a predetermined number of times before or a predetermined time before an acquisition timing of this time. Erroneous determination caused by the battery variation information being delayed with respect to the environmental variation information due to the influence of the thermal capacity of the battery 106 or the like can be prevented. The same applies to the case where the presence or absence of the abnormality sign is determined by using multiple pieces of the battery variation information and multiple pieces of the environmental variation information. The presence or absence of the abnormality sign may be determined using multiple pieces of the environmental variation information a predetermined number of times before timings of the multiple pieces of battery variation information.

### (Disclosure of Technical Ideas)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

### (Technical idea 1)

An abnormality sign diagnosis device is for an electric moving object (100), which is configured to move in a horizontal direction and a vertical direction. The abnormality sign diagnosis device comprises: a determination unit (23) configured to determine presence or absence of an abnormality sign of a battery (106), which is provided to the electric moving object, based on battery variation information, which is variation information of the battery, and environmental variation information, which is variation information of an environmental parameter; and an output unit (24) configured to output information related to the abnormality sign.

### (Technical idea 2)

The abnormality sign diagnosis device is according to the technical idea 1. The environmental variation information includes variation information of a position and/or an external pressure of the electric moving object in the vertical direction.

### (Technical idea 3)

The abnormality sign diagnosis device according to the technical idea 2. The battery variation information includes variation information of at least one of a temperature, a charging and discharging current, a dimension, an internal pressure, and a gas concentration of the battery.

### (Technical idea 4)

The abnormality sign diagnosis device according to any one of the technical ideas 1 to 3, further comprises: a prediction unit (25) configured to, when the determination unit determines that the abnormality sign arises, predict an abnormality occurrence timing based on the battery variation information. The output unit is configured to output the abnormality occurrence timing as output information when the abnormality sign arises.

### (Technical idea 5)

The abnormality sign diagnosis device according to the technical idea 4. The output unit is configured to output the abnormality occurrence timing to a display device.

### (Technical idea 6)

The abnormality sign diagnosis device according to any one of the technical ideas 1 to 5. The determination unit is configured to use a plurality of pieces of the battery variation information and a plurality of pieces of the environmental variation information to determine the abnormality sign.

### (Technical idea 7)

A navigation management system is for an electric moving object (100), which includes a plurality of batteries and is configured to move in a horizontal direction and a vertical direction. The navigation management system comprises: an abnormality sign diagnosis device (20) configured to determine presence or absence of an abnormality sign of each of the batteries based on battery variation information, which is variation information of the battery, and environmental variation information, which is variation information of an environmental parameter, and output information related to the abnormality sign; and a navigation management device (30) configured to manage navigation of the electric moving object and perform predetermined control for ensuring safety of the navigation based on the information related to the abnormality sign.

### (Technical idea 8)

The navigation management system is according to the technical idea 7. The abnormality sign diagnosis device is configured to, when the abnormality sign arises, predict an abnormality occurrence timing based on the battery variation information and output the abnormality occurrence timing. The navigation management device is configured to perform the predetermined control based on the abnormality occurrence timing.

### (Technical idea 9)

The navigation management system is according to the technical idea 8. The navigation management device is configured to perform, as the predetermined control, notification of information including that maintenance of the battery which is abnormal is required, when the abnormality occurrence timing exceeds a predetermined timing which is based on a completion timing in a navigation schedule.

### (Technical idea 10)

The navigation management system is according to the technical idea 9. The navigation management device is configured to perform the predetermined control based on the abnormality occurrence timing and i) a cruising distance in a case where the navigation is continued by other batteries excluding the battery determined to have the abnormality sign among the plurality of batteries or ii) a remaining power amount of the other batteries.

### (Technical idea 11)

The navigation management system is according to the technical idea 10. The navigation management device is configured to continue the navigation with the other batteries, when the abnormality occurrence timing falls below a predetermined timing, which is based on a completion timing in a navigation schedule, and i) the cruising distance with the other batteries exceeds a predetermined distance which is based on the navigation schedule, or ii) the remaining power amount of the other batteries exceeds power amount which is based on the navigation schedule.

### (Technical idea 12)

The navigation management system is according to the technical idea 10 or 11. The navigation management device is configured to re-plan the navigation schedule, when the abnormality occurrence timing falls below a predetermined timing, which is based on a completion timing in a navigation schedule, and i) the cruising distance with the other batteries falls below a predetermined distance which is based on the navigation schedule, or ii) the remaining power amount of the other batteries falls below power amount which is based on the navigation schedule.

### (Technical idea 13)

The navigation management system is according to any one of the technical ideas 7 to 12. The navigation management device is configured to determine navigation permission based on a determination result of the abnormality sign of the battery.

## Claims

1. An abnormality sign diagnosis device for an electric moving object (100), which is configured to move in a horizontal direction and a vertical direction, the abnormality sign diagnosis device comprising:
a determination unit (23) configured to determine presence or absence of an abnormality sign of a battery (106), which is provided to the electric moving object, based on battery variation information, which is variation information of the battery, and environmental variation information, which is variation information of an environmental parameter; and
an output unit (24) configured to output information related to the abnormality sign.

2. The abnormality sign diagnosis device according to claim 1, wherein
the environmental variation information includes variation information of a position and/or an external pressure of the electric moving object in the vertical direction.

3. The abnormality sign diagnosis device according to claim 1 or 2, wherein
the battery variation information includes variation information of at least one of a temperature, a charging and discharging current, a dimension, an internal pressure, and a gas concentration of the battery.

4. The abnormality sign diagnosis device according to claim 1, further comprising:
a prediction unit (25) configured to, when the determination unit determines that the abnormality sign arises, predict an abnormality occurrence timing based on the battery variation information, wherein
the output unit is configured to output the abnormality occurrence timing as output information when the abnormality sign arises.

5. The abnormality sign diagnosis device according to claim 4, wherein
the output unit is configured to output the abnormality occurrence timing to a display device.

6. The abnormality sign diagnosis device according to claim 1, wherein
the determination unit is configured to use a plurality of pieces of the battery variation information and a plurality of pieces of the environmental variation information to determine the abnormality sign.

7. A navigation management system for an electric moving object (100), which includes a plurality of batteries and is configured to move in a horizontal direction and a vertical direction, the navigation management system comprising:
an abnormality sign diagnosis device (20) configured to
determine presence or absence of an abnormality sign of each of the batteries based on battery variation information, which is variation information of the battery, and environmental variation information, which is variation information of an environmental parameter, and
output information related to the abnormality sign; and
a navigation management device (30) configured to
manage navigation of the electric moving object and
perform predetermined control for ensuring safety of the navigation based on the information related to the abnormality sign.

8. The navigation management system according to claim 7, wherein
the abnormality sign diagnosis device is configured to, when the abnormality sign arises, predict an abnormality occurrence timing based on the battery variation information and output the abnormality occurrence timing, and
the navigation management device is configured to perform the predetermined control based on the abnormality occurrence timing.

9. The navigation management system according to claim 8, wherein
the navigation management device is configured to perform, as the predetermined control, notification of information including that maintenance of the battery which is abnormal is required, when the abnormality occurrence timing exceeds a predetermined timing which is based on a completion timing in a navigation schedule.

10. The navigation management system according to claim 8, wherein
the navigation management device is configured to perform the predetermined control based on the abnormality occurrence timing and i) a cruising distance in a case where the navigation is continued by other batteries excluding the battery determined to have the abnormality sign among the plurality of batteries or ii) a remaining power amount of the other batteries.

11. The navigation management system according to claim 10, wherein
the navigation management device is configured to continue the navigation with the other batteries, when the abnormality occurrence timing falls below a predetermined timing, which is based on a completion timing in a navigation schedule, and i) the cruising distance with the other batteries exceeds a predetermined distance which is based on the navigation schedule, or ii) the remaining power amount of the other batteries exceeds power amount which is based on the navigation schedule.

12. The navigation management system according to claim 10 or 11, wherein
the navigation management device is configured to re-plan a navigation schedule, when the abnormality occurrence timing falls below a predetermined timing, which is based on a completion timing in a navigation schedule, and i) the cruising distance with the other batteries falls below a predetermined distance which is based on the navigation schedule, or ii) the remaining power amount of the other batteries falls below power amount which is based on the navigation schedule.

13. The navigation management system according to claim 7, wherein
the navigation management device is configured to determine navigation permission based on a determination result of the abnormality sign of the battery.

14. A program to be applied to an electric moving object (100), which is configured to move in a horizontal direction and a vertical direction, the program is configured to cause at least one processing unit (102) to:
determine presence or absence of an abnormality sign of a battery (106), which is provided to the electric moving object, based on battery variation information, which is variation information of the battery, and environmental variation information, which is variation information of an environmental parameter; and
output information related to the abnormality sign.
